(19) Europäisches Patentamt / European Patent Office / Office européen des brevets

(11) **EP 4 475 390 A1**

(12) **EUROPEAN PATENT APPLICATION**
published in accordance with Art. 153(4) EPC

(43) Date of publication:
**11.12.2024  Bulletin 2024/50**

(21) Application number: **23749554.4**

(22) Date of filing: **20.01.2023**

(51) International Patent Classification (IPC):
*H02J 50/60* (2016.01)     *H02J 7/00* (2006.01)
*H02J 50/12* (2016.01)     *H02J 50/80* (2016.01)

(52) Cooperative Patent Classification (CPC):
**H02J 7/00; H02J 50/12; H02J 50/60; H02J 50/80**

(86) International application number:
**PCT/JP2023/001711**

(87) International publication number:
**WO 2023/149238 (10.08.2023 Gazette 2023/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **01.02.2022  JP 2022014198**

(71) Applicant: **CANON KABUSHIKI KAISHA
Tokyo 146-8501 (JP)**

(72) Inventor: **KOMORIYA, Mitsuo
Tokyo 146-8501 (JP)**

(74) Representative: **Canon Europe Limited
European Intellectual Property Group
4 Roundwood Avenue
Stockley Park
Uxbridge UB11 1AF (GB)**

(54) **ELECTRIC POWER TRANSMISSION DEVICE AND ELECTRIC POWER RECEPTION DEVICE**

(57)     A power transmission device performs a detection process, in accordance with a coupling state between an antenna of the power transmission device and an antenna of a power reception device, to detect an object different from the power reception device, based on values of a voltage or a current at at least two points in time during a predetermined time period in which the power transmission device limits power transmission.

FIG. 10

## Description

Technical Field

The present disclosure relates to a power transmission device, a power reception device, a control method, and a program.

Background Art

In recent years, techniques for wireless power transfer systems have been widely developed. PTL 1 discloses a method of foreign object detection in the Wireless Power Consortium (WPC) standard. PTL 2 discloses a foreign object detection method for detecting the presence of an object based on the amount of decay of the voltage value of a power transmitter during a time period in which the voltage across the power transmitter gradually decreases after power transmission is limited. The foreign object is an object different from a power reception device.

Citation List

Patent Literature

PTL 1: Japanese Patent Laid-Open No. 2017-70074
PTL 2: PCT Japanese Translation Patent Publication No. 2018-512036

Summary of Invention

Technical Problem

In a method of detecting the presence of an object using the method described in PTL 2, power transmission by the power transmission device is limited, which may result in the generation of electromagnetic noise. To suppress such generation of electromagnetic noise, the number of times of limitation of power transmission by the power transmission device is desirably small.
The present disclosure provides a technique for suppressing generation of electromagnetic noise in a method of detecting an object different from a power reception device based on a voltage and a current during a time period in which a power transmission device limits power transmission.

Solution to Problem

An aspect of the present disclosure provides a power transmission device for wirelessly transmitting power to a power reception device. The power transmission device includes acquisition means for acquiring a coupling state between an antenna of the power transmission device and an antenna of the power reception device, and detection means for performing a detection process to detect an object different from the power reception device, detection of the object being based on values of a voltage or a current at at least two points in time during a predetermined time period in which the power transmission device limits power transmission. The detection means detects the object, which is different from the power reception device, in accordance with the coupling state acquired by the acquisition means. Advantageous Effects of Invention
According to the present disclosure, it is possible to suppress generation of electromagnetic noise in a method of detecting an object different from a power reception device based on a voltage and a current during a time period in which a power transmission device limits power transmission.

Brief Description of Drawings

[Fig. 1] Fig. 1 is a diagram illustrating an example configuration of a wireless power transfer system.
[Fig. 2] Fig. 2 is a diagram illustrating foreign object detection using a power loss method.
[Fig. 3] Fig. 3 is a diagram illustrating an example configuration of a power transmission device.
[Fig. 4] Fig. 4 is a diagram illustrating an example configuration of a power reception device.

[Fig. 5] Fig. 5 is a block diagram illustrating an example functional configuration of a control unit of the power transmission device.

[Fig. 6] Fig. 6 is a sequence diagram illustrating an example process for performing wireless power transfer.

[Fig. 7] Fig. 7 is a diagram illustrating foreign object detection using a waveform decay method.

[Fig. 8] Fig. 8 is a diagram illustrating foreign object detection using the waveform decay method.

[Fig. 9] Fig. 9 is an equivalent circuit diagram of the power transmission antenna and the power reception antenna.

[Fig. 10] Fig. 10 is a flowchart illustrating the operation of the power transmission device.

[Fig. 11] Fig. 11 is a flowchart illustrating the operation of the power reception device.

[Fig. 12A] Fig. 12A is a sequence diagram illustrating example processing in a Calibration phase.

[Fig. 12B] Fig. 12B is a sequence diagram illustrating example processing in the Calibration phase.

[Fig. 12C] Fig. 12C is a sequence diagram illustrating example processing in the Calibration phase.

[Fig. 13] Fig. 13 is a flowchart illustrating the operation of the power transmission device.

[Fig. 14] Fig. 14 is a flowchart illustrating the operation of the power reception device.

[Fig. 15A] Fig. 15A is a sequence diagram illustrating example processing in the Calibration phase.

[Fig. 15B] Fig. 15B is a sequence diagram illustrating example processing in the Calibration phase.

[Fig. 15C] Fig. 15C is a sequence diagram illustrating example processing in the Calibration phase.

Description of Embodiments

Embodiments will be described in detail hereinafter with reference to the drawings. While the embodiments describe features, not all of the features are essential. A plurality of features may be combined in any manner. Further, in the drawings, the same or similar components are denoted by the same reference numerals.

(First Embodiment)

[Configuration of Wireless Power Transfer System]

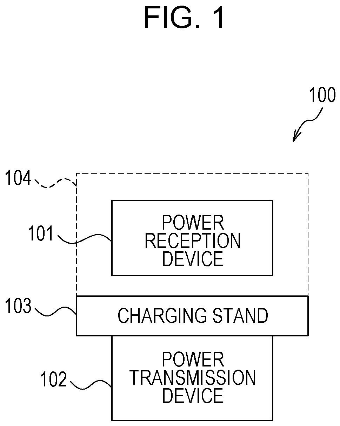

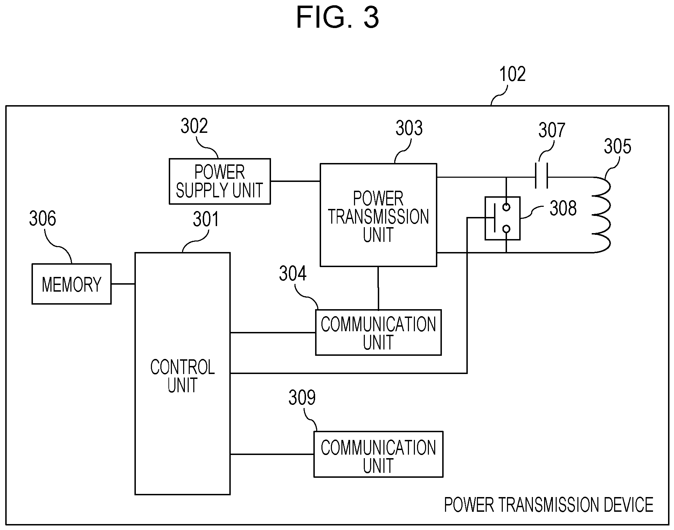

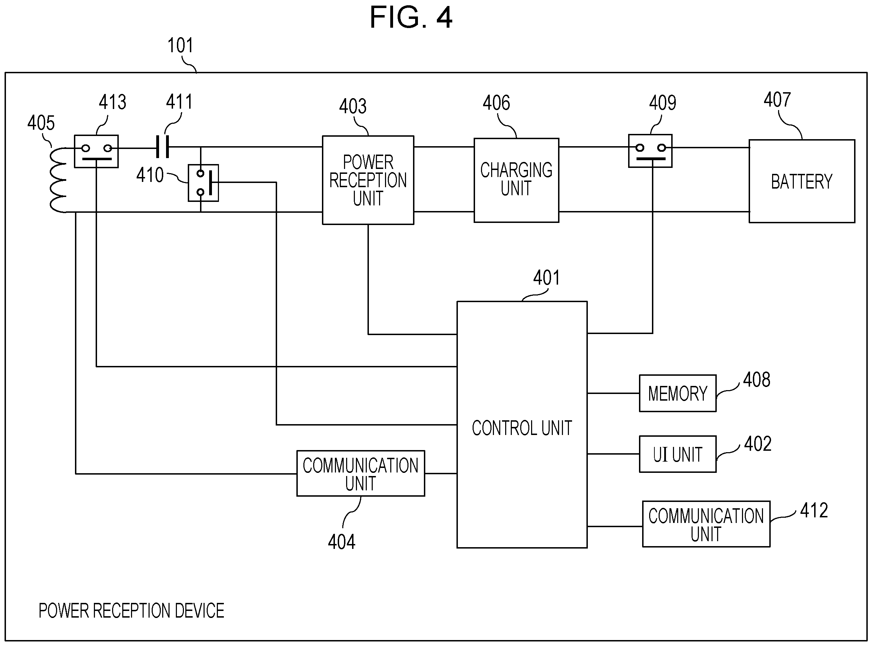

Fig. 1 is a diagram illustrating an example configuration of a wireless power transfer system (wireless charging system) 100 according to a first embodiment. In one example, the wireless power transfer system 100 includes a power reception device 101 and a power transmission device 102. A charging stand 103 is a portion of the power transmission device 102. The detailed configurations of the power transmission device 102 and the power reception device 101 will be described below with reference to Figs. 3 and 4. The power reception device 101 is an electronic device that receives power from the power transmission device 102 and charges a built-in battery. The power transmission device 102 is an electronic device that wirelessly transmits power to the power reception device 101 placed on the charging stand 103, which is a portion of the power transmission device 102. A range 104 is a range over which the power reception device 101 can receive power from the power transmission device 102.

The power reception device 101 and the power transmission device 102 may have a function of executing an application other than wireless charging. An example of the power reception device 101 is a smartphone. An example of the power transmission device 102 is an accessory device for charging the smartphone. The wireless power transfer system 100 may be a tablet, a storage device such as a hard disk device or a memory device, or an information processing apparatus such as a personal computer (PC). Alternatively, the wireless power transfer system 100 may be, for example, an imaging device (such as a camera or a video camera), an automobile, a robot, a medical device, a printer, or the like.

The wireless power transfer system 100 performs wireless power transfer using an electromagnetic induction method for wireless charging based on the Wireless Power Consortium (WPC) standard. That is, the power reception device 101 and the power transmission device 102 perform wireless power transfer for wireless charging based on the WPC standard between a power reception antenna 405 (Fig. 4) of the power reception device 101 and a power transmission antenna 305 (Fig. 3) of the power transmission device 102. The wireless power transfer method applied to the wireless power transfer system 100 is not limited to a method defined by the WPC standard, and may be any other electromagnetic induction method, a magnetic field resonance method, an electric field resonance method, a microwave method, or a method using a laser or the like. While the present embodiment describes an example in which wireless power transfer is used for wireless charging, wireless power transfer may be performed for purposes other than wireless charging.

In the WPC standard, the magnitude of power guaranteed when the power reception device 101 receives power from the power transmission device 102 is defined by a value called guaranteed power (hereinafter referred to as "GP"). GP indicates a power value at which output to a load of the power reception device 101 is guaranteed even if, for example, the positional relationship between the power reception device 101 and the power transmission device 102 changes and the power transmission efficiency between the power reception antenna 405 and the power transmission antenna 305 decreases. Examples of the load of the power reception device 101 include a charging unit 406 and a battery 407 illustrated in Fig. 4. For example, when the GP is 5 watts, the power transmission device 102 performs power transmission by performing control to output 5 watts to the load in the power reception device 101 even if the positional relationship between the power reception antenna 405 and the power transmission antenna 305 changes and the power transmission efficiency decreases.

When a foreign object, which is not the power reception device 101, is present near the power transmission device 102 during power transmission from the power transmission device 102 to the power reception device 101, an electromagnetic wave for power transmission may affect the foreign object, resulting in an increase in the temperature of the foreign object or destruction of the foreign object. Accordingly, the WPC standard defines a method by which the power transmission device 102 detects the presence of a foreign object on the charging stand 103 so as to prevent an increase in the temperature of the foreign object or destruction of the foreign object by stopping power transmission when the foreign object is present. Specifically, the WPC standard defines a power loss method for detecting a foreign object based on the difference between transmitted power of the power transmission device 102 and received power of the power reception device 101. The WPC standard also defines a Q-factor measurement method for detecting a foreign object based on a change in the quality factor (Q-factor) of the power transmission antenna (power transmission coil) 305 of the power transmission device 102. In the present embodiment, the foreign object to be detected by the power transmission device 102 is not limited to an object present on the charging stand 103. The power transmission device 102 desirably detects a foreign object located near the power transmission device 102. For example, the power transmission device 102 may detect a foreign object located in the range 104 over which the power transmission device 102 can transmit power.

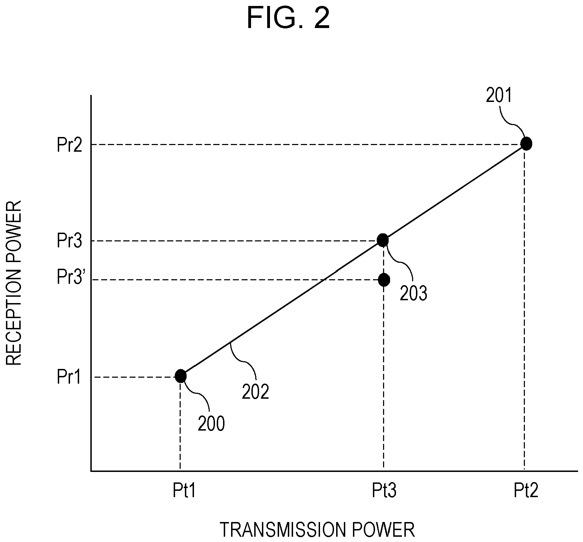

Fig. 2 is a diagram illustrating foreign object detection based on the power loss method defined by the WPC standard. In Fig. 2, the horizontal axis represents the transmitted power of the power transmission device 102, and the vertical axis represents the received power of the power reception device 101. The term "foreign object" refers to an object that may affect the transmission of power from the power transmission device 102 to the power reception device 101 and that is different from the power reception device 101. For example, the foreign object is an object such as a metal piece having electrical conductivity. Examples of the metal piece include a clip and an IC card. An object that is integral to a power reception device and a product having the power reception device incorporated herein or a product having a power transmission device and a power reception device incorporated therein and that may unintentionally generate heat when exposed to wireless power to be transmitted by a power transmission antenna is not a foreign object.

First, the power transmission device 102 transmits power of a transmitted power value Pt1 to the power reception device 101. Then, the power reception device 101 receives power of a received power value Pr1. Then, the power transmission device 102 stores the transmitted power value Pt1. The transmitted power value Pt1 or the received power value Pr1 is a predetermined minimum transmitted power or received power. At this time, the power reception device 101 controls the load (such as the charging unit 406 and the battery 407 illustrated in Fig. 4, for example) so that the power to be received is minimum. This state of the load is referred to as a state of Light Load (light-load state). For example, the power reception device 101 may disconnect the load from the power reception antenna 405 so that the received power is not supplied to the load. Subsequently, the power reception device 101 transmits the received power value Pr1 to the power transmission device 102. Upon receiving the received power value Pr1 from the power reception device 101, the power transmission device 102 can calculate that an amount of power loss Ploss1 between the power transmission device 102 and the power reception device 101 is equal to Pt1 - Pr1, and create a calibration point 200 indicating the correspondence between Pt1 and Pr1.

Subsequently, the power transmission device 102 changes the transmitted power value to a transmitted power value Pt2 and transmits power of the transmitted power value Pt2 to the power reception device 101. Then, the power reception device 101 receives power of a received power value Pr2. Then, the power transmission device 102 stores the transmitted power value Pt2. The transmitted power value Pt2 or the received power value Pr2 is a predetermined maximum transmitted power or received power. At this time, the power reception device 101 controls the load (such as the charging unit 406 and the battery 407 illustrated in Fig. 4, for example) so that the power to be received is maximum. This state of the load is referred to as a state of Connected Load (load-connected state). For example, the power reception device 101 connects the power reception antenna 405 to the load so that the received power is supplied to the load. Subsequently, the power reception device 101 transmits the received power value Pr2 to the power transmission device 102. Upon receiving the received power value Pr2 from the power reception device 101, the power transmission device 102 can calculate that an amount of power loss Ploss2 between the power transmission device 102 and the power reception device 101 is equal to Pt2 - Pr2, and create a calibration point 201 indicating the correspondence between Pt2 and Pr2.

Then, the power transmission device 102 creates a straight line 202 for linear interpolation between the calibration point 200 and the calibration point 201. The straight line 202 indicates the relationship between the transmitted power and the received power when no foreign object is present near the power transmission device 102. Based on the straight line 202, the power transmission device 102 can predict the value of power received by the power reception device 101 when power of a predetermined transmitted power value is transmitted in the absence of a foreign object. For example, when the power transmission device 102 transmits power of a transmitted power value Pt3, the power transmission device 102 can estimate that the received power value of power to be received by the power reception device 101 will be Pr3, from a point 203 corresponding to the transmitted power value Pt3 on the straight line 202.

The power transmission device 102 can determine the amount of power loss between the power transmission device 102 and the power reception device 101 according to the load of the power reception device 101, based on a plurality of combinations of transmitted power values of the power transmission device 102 and received power values of the power reception device 101, which are measured with changing the load of the power reception device 101. Further, the power transmission device 102 can estimate, by interpolation from the plurality of combinations described above, the amount of power loss between the power transmission device 102 and the power reception device 101 according to all the loads of the power reception device 101. As described above, the power transmission device 102 and the power reception device 101 perform calibration processing to allow the power transmission device 102 to acquire the combinations of transmitted power values and received power values. Such calibration processing is hereinafter referred to as "power loss method based calibration processing (CAL processing)".

After the calibration described above is performed, when the power transmission device 102 transmits power of the transmitted power value Pt3 to the power reception device 101, the power transmission device 102 is assumed to actually receive a received power value Pr3' from the power reception device 101. The power transmission device 102 subtracts the received power value Pr3', which is actually received from the power reception device 101, from the received power value Pr3 in the absence of a foreign object near the power transmission device 102 to calculate the value Ploss_FO = Pr3 - Pr3'. The value Ploss_FO can be considered as the amount of power loss due to the power consumed by a foreign object when the foreign object is present near the power transmission device 102 and the power reception device 101. Accordingly, if the power value Ploss_FO, which would have been consumed by a foreign object, exceeds a predetermined threshold, the power transmission device 102 can determine that a foreign object is present near the power transmission device 102.

Alternatively, the power transmission device 102 determines, from the received power value Pr3 in the absence of a foreign object near the power transmission device 102, an amount of power loss Ploss3 = Pt3 - Pr3 between the power transmission device 102 and the power reception device 101 in advance. Next, in the presence of a foreign object near the power transmission device 102, the power transmission device 102 determines, from the received power value Pr3' received from the power reception device 101, an amount of power loss Ploss3' = Pt3 - Pr3' between the power transmission device 102 and the power reception device 101 in the presence of the foreign object. Then, the power transmission device 102 may use Ploss3' - Ploss3 (= Ploss_FO) to estimate the power value Ploss_FO, which would have been consumed by the foreign object.

As described above, the power value Ploss_FO, which would have been consumed by the foreign object, may be determined as Pr3 - Pr3' (= Ploss_FO) or as Ploss3' - Ploss3 (= Ploss_FO). The following describes, basically, a method of determining Ploss3' - Ploss3 (= Ploss_FO). However, the present embodiment can also be applied to a method of determining Pr3 - Pr3' (= Ploss_FO). The foregoing description is directed to the foreign object detection based on the power loss method.

The foreign object detection using the power loss method is performed during power transfer (power transmission) (a Power Transfer phase described below) on the basis of data obtained in a Calibration phase described below. The foreign object detection using the Q-factor measurement method is performed before the power transfer (i.e., in a Negotiation phase or a Renegotiation phase before transmission of a digital ping described below).

The power reception device 101 and the power transmission device 102 according to the present embodiment perform communication for power transmission/reception control based on the WPC standard. In the WPC standard, a plurality of phases including the Power Transfer phase in which power transfer is executed and one or more phases before actual power transfer are defined, and communication for necessary power transmission/reception control is performed in each phase. The phases before power transfer include a Selection phase, a Ping phase, an Identification and Configuration phase, a Negotiation phase, and a Calibration phase. The Identification and Configuration phase is hereinafter referred to as an I & C phase. The processing in each phase will be described hereinafter.

In the Selection phase, the power transmission device 102 intermittently transmits an analog ping and detects the placement of an object on the charging stand 103 of the power transmission device 102 (e.g., the placement of the power reception device 101, a conductor piece, or the like on the charging stand 103). The power transmission device 102 detects at least one of the voltage value and the current value of the power transmission antenna 305 at the time of transmission of the analog ping. If the voltage value falls below a certain threshold or if the current value exceeds a certain threshold, the power transmission device 102 determines that an object is present. Then, the power transmission device 102 transitions to the Ping phase.

In the Ping phase, the power transmission device 102 transmits a digital ping having larger power than the analog ping. The magnitude of the power of the digital ping is sufficient to activate a control unit 401 (Fig. 4) of the power reception device 101 placed on the charging stand 103 of the power transmission device 102. The power reception device 101 notifies the power transmission device 102 of a power reception voltage value. As described above, the power transmission device 102 receives a response from the power reception device 101, which has received the digital ping.

As a result, the power transmission device 102 recognizes that the object detected in the Selection phase is the power reception device 101. Upon receiving the notification of the power reception voltage value, the power transmission device 102 transitions to the I & C phase. Before transmitting the digital ping, the power transmission device 102 measures the Q-factor of the power transmission antenna 305. The measurement result is used to execute the foreign object detection process using the Q-factor measurement method.

In the I & C phase, the power transmission device 102 identifies the power reception device 101 and acquires device configuration information (capability information) from the power reception device 101. The power reception device 101 transmits an ID packet and a configuration packet. The ID packet includes identifier information of the power reception device 101, and the configuration packet includes the device configuration information (capability information) of the power reception device 101. Upon receiving the ID packet and the configuration packet, the power transmission device 102 responds with an acknowledgement (ACK or positive response). Then, the I & C phase ends.

In the Negotiation phase, the value of GP is determined based on the value of GP requested by the power reception device 101, the power transmission capability of the power transmission device 102, and the like. The power transmission device 102 receives an FOD status packet including a reference quality factor value from the power reception device 101. The reference quality factor value is a Q-factor that can be measured at a terminal of a power transmission antenna of a test power transmission device when a power reception device is placed on the test power transmission device and no foreign object is present nearby. In the Q-factor measurement method, the presence or absence of a foreign object is determined based on a threshold that is based on the reference quality factor value. In response to a request from the power reception device 101, the power transmission device 102 executes the foreign object detection process using the Q-factor measurement method. The WPC standard also defines a method in which the power transmission device 102 once shifts to the Power Transfer phase and then performs processing similar to that in the Negotiation phase again in response to a request from the power reception device 101. A phase in which these processes are performed after the shift from the Power Transfer phase is referred to as a Renegotiation phase.

In the Calibration phase, the power transmission device 102 and the power reception device 101 perform calibration in accordance with the WPC standard. Further, the power reception device 101 notifies the power transmission device 102 of a predetermined received power value (received power value in the light-load state/received power value in a maximum load state), and the power transmission device 102 performs adjustment for efficient power transmission. The received power value notified to the power transmission device 102 is used for a foreign object detection process using the power loss method.

The Power Transfer phase involves control to, for example, start and continue power transmission, and stop power transmission due to an error or full charge. For such power transmission/reception control, the power transmission device 102 and the power reception device 101 use the power transmission antenna 305 and the power reception antenna 405 to perform communication by superimposing a signal on an electromagnetic wave to be transmitted from the power transmission antenna 305 or the power reception antenna 405 in accordance with the WPC standard. The range over which the power transmission device 102 and the power reception device 101 can communicate with each other in accordance with the WPC standard is substantially the same as the power-transmittable range 104 of the power transmission device 102.

[Configurations of Power Transmission Device 102 and Power Reception Device 101]

Next, the configurations of the power transmission device 102 and the power reception device 101 according to the present embodiment will be described. The configurations described below are merely examples, and some (or all) of the components described below may be replaced with other components having similar functions or may be omitted, and a further component may be added to the configurations described below. Furthermore, one block presented in the following description may be divided into a plurality of blocks, or a plurality of blocks may be integrated into one block. In addition, the function of each functional block described below is implemented as a software program. However, some or all of the functional blocks may be implemented as hardware.

Fig. 3 is a block diagram illustrating an example functional configuration of the power transmission device 102 according to the present embodiment. The power transmission device 102 includes a control unit 301, a power supply unit 302, a power transmission unit 303, a communication unit 304, the power transmission antenna 305, a memory 306, a resonant capacitor 307, a switch unit 308, and a communication unit 309. In Fig. 3, the control unit 301, the power supply unit 302, the power transmission unit 303, the communication unit 304, the memory 306, and the communication unit 309 are illustrated as separate blocks. However, any plurality of functional blocks among these blocks may be implemented in the same chip.

The control unit 301 controls the overall operation of the power transmission device 102 by, for example, executing a control program stored in the memory 306. The control unit 301 also performs control related to power transmission control including communication for device authentication of the power transmission device 102. Further, the control unit 301 may perform control for executing an application other than wireless power transfer. The control unit 301 is configured to include one or more processors such as a central processing unit (CPU) or a microprocessor unit (MPU). The control unit 301 may be configured by hardware such as an application specific integrated circuit (ASIC). The control unit 301 may also be configured to include an array circuit such as a field programmable gate array (FPGA) compiled to execute predetermined processing. The control unit 301 causes the memory 306 to store information to be stored during execution of various processes. Further, the control unit 301 measures time using a timer (not illustrated).

The power supply unit 302 supplies DC power or AC power to each functional block. The power supply unit 302 is, for example, a commercial power supply or a battery. The battery stores power supplied from a commercial power supply.

The power transmission unit 303 converts DC or AC power input from the power supply unit 302 into AC power in a frequency band used for wireless power transfer, and inputs the AC power to the power transmission antenna 305, thereby generating an electromagnetic wave to be received by the power reception device 101. For this reason, the power transmission unit 303 includes an inverter. For example, the power transmission unit 303 converts a DC voltage supplied from the power supply unit 302 into an AC voltage by using a switching circuit having a half-bridge or full-bridge configuration using a field effect transistor (FET). In this case, the power transmission unit 303 includes a gate driver that controls on/off of the FET.

The power transmission unit 303 adjusts one or both of a voltage (power transmission voltage) and a current (power transmission current) to be input to the power transmission antenna 305 to control the intensity of an electromagnetic wave to be output. As the power transmission voltage or the power transmission current increases, the intensity of the electromagnetic wave increases. As the power transmission voltage or the power transmission current decreases, the intensity of the electromagnetic wave decreases. Further, in response to an instruction from the control unit 301, the power transmission unit 303 performs output control of AC power to start or stop power transmission from the power transmission antenna 305. The power transmission unit 303 has a capability of supplying power sufficient to output a power of 15 watts (W) to the charging unit 406 of the power reception device 101 compliant with the WPC standard.

The communication unit 304 communicates with the power reception device 101 for power transmission control based on the WPC standard. The communication unit 304 modulates an electromagnetic wave to be output from the power transmission antenna 305, transmits information to the power reception device 101, and performs communication. Further, the communication unit 304 demodulates an electromagnetic wave modulated by the power reception device 101 and transmitted from the power transmission antenna 305 and acquires information transmitted from the power reception device 101. That is, communication performed by the communication unit 304 is performed by superimposing a signal on an electromagnetic wave to be transmitted from the power transmission antenna 305.

The memory 306 stores, as well as the control program, the states of the power transmission device 102 and the power reception device 101 (such as a transmitted power value and a received power value) and the like. For example, the state of the power transmission device 102 is acquired by the control unit 301. The state of the power reception device 101 is acquired by the control unit 401 (Fig. 4) of the power reception device 101, and is received by the control unit 301 via the communication unit 304.

The switch unit 308 is controlled by the control unit 301. The power transmission antenna 305 is connected to the resonant capacitor 307. When the switch unit 308 is turned on and short-circuited, the power transmission antenna 305 and the resonant capacitor 307 form a series resonant circuit and resonate at a specific frequency f1. At this time, a current flows through a closed circuit formed by the power transmission antenna 305, the resonant capacitor 307, and the switch unit 308. When the switch unit 308 is turned off and opened, power is supplied from the power transmission unit 303 to the power transmission antenna 305 and the resonant capacitor 307.

The communication unit 309 communicates with a communication unit 412 (Fig. 4) of the power reception device 101 by communication based on a standard different from the WPC standard using an antenna different from the power transmission antenna 305. Examples of the communication standard include a wireless LAN, Bluetooth (registered trademark), Low Energy (BLE), and near field communication (NFC). The power transmission device 102 may communicate with the power reception device 101 by selectively using the communication unit 304 and the communication unit 309.

Fig. 4 is a block diagram illustrating an example configuration of the power reception device 101 according to the present embodiment. The power reception device 101 includes the control unit 401, a user interface (UI) unit 402, a power reception unit 403, a communication unit 404, the power reception antenna 405, the charging unit 406, the battery 407, a memory 408, and a switch unit 409. The power reception device 101 further includes a switch unit 410, a resonant capacitor 411, the communication unit 412, and a switch unit 413. The functional blocks illustrated in Fig. 4 may be implemented as a single hardware module.

The control unit 401 controls the overall operation of the power reception device 101 by, for example, executing a control program stored in the memory 408. That is, the control unit 401 controls the functional units illustrated in Fig. 4. Further, the control unit 401 may perform control for executing an application other than wireless power transfer. An example of the control unit 401 is configured to include one or more processors such as a CPU or an MPU. The control unit 401 may control the overall operation of the power reception device 101 (when the power reception device 101 is a smartphone, the overall operation of the smartphone) in cooperation with an operating system (OS) executed by the control unit 401.

The control unit 401 may be configured by hardware such as an ASIC. The control unit 401 may also be configured to include an array circuit such as an FPGA compiled to execute predetermined processing. The control unit 401 causes the memory 408 to store information to be stored during execution of various processes. Further, the control unit 401 measures time using a timer (not illustrated).

The UI unit 402 performs various outputs to the user. The various outputs, as used here, are operations such as screen display, blinking or color change of a light emitting diode (LED), audio output from a speaker, and vibration of the main body of the power reception device 101. The UI unit 402 is implemented by a liquid crystal panel, a speaker, a vibration motor, or the like.

The power reception unit 403 acquires, via the power reception antenna 405, AC power (AC voltage and AC current) generated by electromagnetic induction based on electromagnetic waves radiated from the power transmission antenna 305 of the power transmission device 102. Then, the power reception unit 403 converts the AC power into DC power or AC power of a predetermined frequency, and outputs the power to the charging unit 406, which performs a process for charging the battery 407. That is, the power reception unit 403 includes a rectifying unit (rectifier) and a voltage control unit, which are necessary for supplying power to a load in the power reception device 101. The GP described above is the amount of power guaranteed to be output from the power reception unit 403. The power reception unit 403 has a capability of supplying power for the charging unit 406 to charge the battery 407 and supplying power sufficient to output a power of 15 watts to the charging unit 406.

The communication unit 404 communicates with the communication unit 304 included in the power transmission device 102 for power reception control based on the WPC standard as described above. The communication unit 404 demodulates an electromagnetic wave input from the power reception antenna 405 and acquires information transmitted from the power transmission device 102. Then, the communication unit 404 performs load modulation or amplitude modulation on the input electromagnetic wave to superimpose a signal related to information to be transmitted to the power transmission device 102 on the electromagnetic wave, thereby performing communication with the power transmission device 102.

The memory 408 stores, as well as the control program, the states of the power transmission device 102 and the power reception device 101 and the like. For example, the state of the power reception device 101 is acquired by the control unit 401. The state of the power transmission device 102 is acquired by the control unit 301 of the power transmission device 102, and is received by the control unit 401 via the communication unit 404 or the communication unit 412.

The switch unit 409 and the switch unit 410 are controlled by the control unit 401. The power reception antenna 405 is connected to the resonant capacitor 411. When the switch unit 410 is turned on and short-circuited, the power reception antenna 405 and the resonant capacitor 411 form a series resonant circuit and resonate at a specific frequency f2. At this time, a current flows through a closed circuit formed by the power reception antenna 405, the resonant capacitor 411, and the switch unit 410, and no current flows through the power reception unit 403. When the switch unit 410 is turned off and opened, the power received by the power reception antenna 405 and the resonant capacitor 411 is supplied to the power reception unit 403.

The switch unit 410 may be disposed between the power reception antenna 405 and the resonant capacitor 411. When the switch unit 413 is turned on and the switch unit 410 is turned on, the terminal of the power reception antenna 405 is short-circuited.

The switch unit 409 is for controlling whether to supply the received power to the battery 407, which is a load. The switch unit 409 also has a function of controlling the value of the load. When the switch unit 409 is turned off and opened, the received power is not supplied to the battery 407. When the switch unit 409 is turned on and short-circuited, the received power is supplied to the battery 407.

In Fig. 4, the switch unit 409 is disposed between the charging unit 406 and the battery 407. Alternatively, the switch unit 409 may be disposed between the power reception unit 403 and the charging unit 406. Alternatively, the switch unit 409 may be disposed between the power reception unit 403 and the closed circuit formed by the power reception antenna 405, the resonant capacitor 411, and the switch unit 410. That is, the switch unit 409 may be for controlling whether to supply the received power to the power reception unit 403. In Fig. 4, furthermore, the switch unit 409 is illustrated as one block. However, the switch unit 409 may be implemented as a portion of the charging unit 406 or a portion of the power reception unit 403. While the switch unit 409 is inserted in series between the charging unit 406 and the battery 407, the switch unit 409 may be inserted in parallel between the charging unit 406 and the battery 407. In this case, when the switch unit 409 is turned off and opened, the received power is supplied to the battery 407. When the switch unit 409 is turned on and short-circuited, the received power is not supplied to the battery 407.

The switch unit 413 is for controlling whether to open the terminal of the power reception antenna 405. When the switch unit 413 is turned off, the terminal of the power reception antenna 405 is brought into the opened state. When the switch unit 413 is turned on, the power reception antenna 405 is connected to the power reception unit 403 via the resonant capacitor 411. In Fig. 4, the switch unit 413 is disposed between the power reception antenna 405 and the resonant capacitor 411. Alternatively, the switch unit 413 may be disposed between the resonant capacitor 411 and the power reception unit 403.

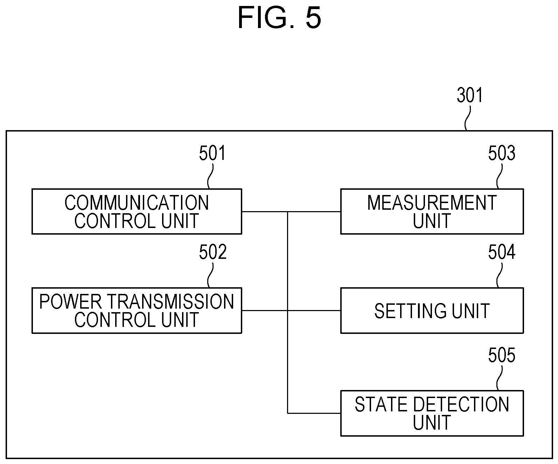

Fig. 5 is a block diagram illustrating an example functional configuration of the control unit 301 of the power transmission device 102 illustrated in Fig. 3. The control unit 301 includes a communication control unit 501, a power transmission control unit 502, a measurement unit 503, a setting unit 504, and a state detection unit 505. The communication control unit 501 performs control communication with the power reception device 101 based on the WPC standard via the communication unit 304. Alternatively, the communication control unit 501 performs control communication with the power reception device 101 via the communication unit 309.

The power transmission control unit 502 controls the power transmission unit 303 to control the transmission of power to the power reception device 101. The measurement unit 503 measures a waveform decay index described below. Further, the measurement unit 503 measures power to be transmitted to the power reception device 101 via the power transmission unit 303, and measures an average transmitted power value per unit time. Further, the measurement unit 503 measures the Q-factor of the power transmission antenna 305. Further, the measurement unit 503 measures the coupling state (e.g., a coupling coefficient) between the power transmission antenna 305 and the power reception antenna 405, which will be described below.

The setting unit 504 sets, based on the waveform decay index measured by the measurement unit 503, a threshold used for foreign object detection by, for example, calculation processing. Alternatively, the setting unit 504 sets, based on the coupling state between the power transmission antenna 305 and the power reception antenna 405 measured by the measurement unit 503, a threshold used for foreign object detection or position shift detection between the power transmission device 102 and the power reception device 101 by, for example, calculation processing. The coupling state is, for example, a coupling coefficient.

The state detection unit 505 detects a state between the power transmission device 102 and the power reception device 101. For example, the state detection unit 505 detects a foreign object that is present between the power transmission device 102 and the power reception device 101, or detects a position shift between the power transmission antenna 305 and the power reception antenna 405. For example, the state detection unit 505 implements the power loss method, the Q-factor measurement method, the waveform decay method, a foreign object detection function based on the coupling state (e.g., a coupling coefficient) between the power transmission antenna 305 and the power reception antenna 405, and a position shift detection function between the power transmission antenna 305 and the power reception antenna 405. The state detection unit 505 may also have a function of detecting a foreign object or performing a process of detecting a position shift between the power transmission antenna 305 and the power reception antenna 405 by using any other method. For example, in the power transmission device 102 having a near field communication (NFC) communication function, the state detection unit 505 may perform a foreign object detection process by using a partner device detection function according to the NFC standard. The state detection unit 505 can also detect a change in the state of the power transmission device 102 as a function other than detection of a foreign object. For example, the power transmission device 102 can also detect an increase or decrease in the number of power reception devices 101 on the power transmission device 102.

The setting unit 504 sets a threshold serving as a reference for determining the presence or absence of a foreign object when the power transmission device 102 performs foreign object detection based on the power loss method, the Q-factor measurement method, the waveform decay method, or the coupling state (e.g., a coupling coefficient) between the power transmission antenna 305 and the power reception antenna 405. The setting unit 504 may have a function of setting a threshold serving as a reference for determining the presence or absence of a foreign object, which is necessary for performing a foreign object detection process using any other method. The state detection unit 505 can perform the foreign object detection process or the position shift detection process based on the threshold set by the setting unit 504 and the waveform decay index, the transmitted power, the Q-factor, or the coupling state between the power transmission antenna 305 and the power reception antenna 405 measured by the measurement unit 503. The coupling state is, for example, a coupling coefficient. The position shift detection process is a process of detecting a position shift between the power transmission antenna 305 and the power reception antenna 405.

The functions of the communication control unit 501, the power transmission control unit 502, the measurement unit 503, the setting unit 504, and the state detection unit 505 are implemented by the control unit 301 executing programs. The processing units are each configured as an independent program and can operate in parallel while synchronizing the programs by event processing or the like. Two or more of these processing units may be incorporated in one program.

[Flow of Process for Power Transfer According to WPC Standard]

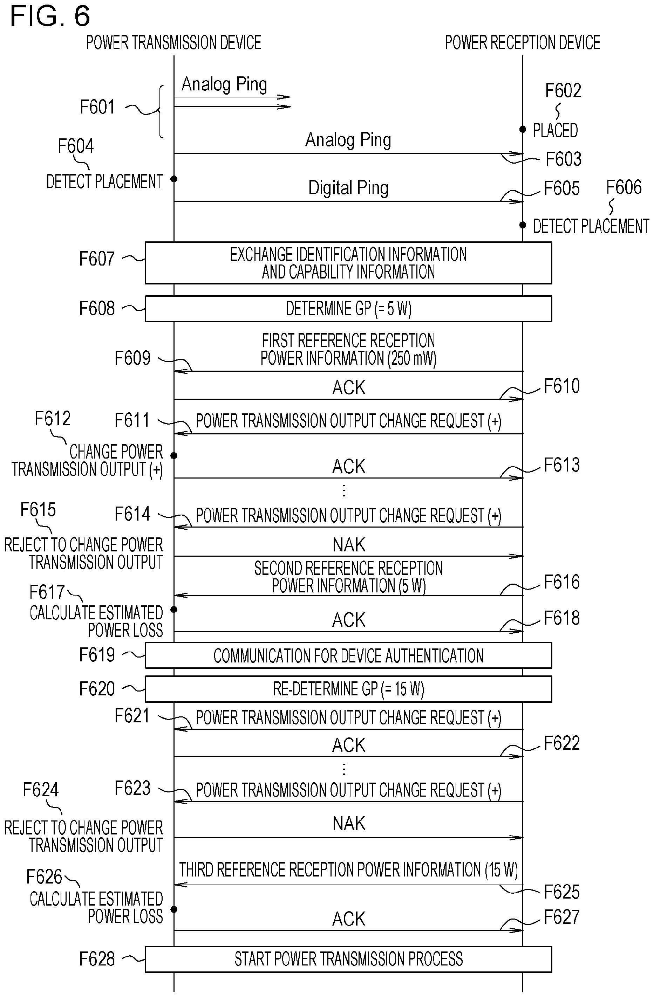

The WPC standard defines the Selection phase, the Ping phase, the I & C phase, the Negotiation phase, the Calibration phase, and the Power Transfer phase. In the following, the operations of the power transmission device 102 and the power reception device 101 in these phases will be described with reference to a sequence diagram illustrated in Fig. 6.

Fig. 6 is a sequence diagram for power transfer according to the WPC standard. The power transmission device 102 and the power reception device 101 will be described by way of example. In step F601, the power transmission device 102 repeatedly and intermittently transmits an analog ping of the WPC standard to detect an object present within the power-transmittable range 104. The power transmission device 102 executes processing defined as the Selection phase and the Ping phase of the WPC standard and waits for the power reception device 101 to be placed on the charging stand 103.

In step F602, the power reception device (e.g., a smartphone) 101 is placed on the charging stand 103 to charge the power reception device 101. Accordingly, the power reception device 101 is placed within the range 104 over which the power transmission device 102 can transmit power. In step F603, the power reception device 101 receives the analog ping. In step F604, the power transmission device 102 detects the presence of an object within the power-transmittable range 104. Then, in step F605, the power transmission device 102 transmits a digital ping of the WPC standard. In step F606, upon receiving the digital ping, the power reception device 101 recognizes that the power transmission device 102 has detected the power reception device 101, and responds. In response to a predetermined response to the digital ping, the power transmission device 102 determines that the detected object is the power reception device 101 and that the power reception device 101 has been placed on the charging stand 103.

In step F607, upon detecting the placement of the power reception device 101, the power transmission device 102 acquires identification information and capability information of the power reception device 101 from the power reception device 101 through communication in the I & C phase defined by the WPC standard. The identification information of the power reception device 101 includes a manufacturer code and a basic device ID. The capability information of the power reception device 101 includes information elements that can identify the version of the WPC standard that the power reception device 101 supports, a maximum power value, and information indicating whether the power reception device 101 has the negotiation function of the WPC standard. The maximum power value is a value that identifies the maximum power value that the power reception device 101 can supply to a load. The power transmission device 102 may acquire the identification information and the capability information of the power reception device 101 by using a method other than communication in the I & C phase of the WPC standard. The identification information may be any other identification information that can identify the individual power reception device 101, such as a wireless power ID. The capability information may include information other than those described above.

Subsequently, in step F608, the power transmission device 102 performs communication with the power reception device 101 in the Negotiation phase defined by the WPC standard to determine the value of GP. In the present embodiment, GP = 5 watts. In step F608, instead of communication in the Negotiation phase of the WPC standard, any other procedure for determining GP may be executed. Further, the power transmission device 102 can acquire information indicating that the power reception device 101 does not support the Negotiation phase, for example, in step F607. In this case, the power transmission device 102 may set the value of GP to, for example, a small value defined in advance by the WPC standard without performing communication in the Negotiation phase.

In step F609 and subsequent steps, after determining GP, the power transmission device 102 and the power reception device 101 perform calibration based on the GP. In step F609, the power reception device 101 transmits, to the power transmission device 102, information (hereinafter referred to as first reference received power information) including the received power value Pr1 in the light-load state (state of Light Load, load-disconnected state, or load state in which a transmitted power value is equal to or less than a first threshold). For example, the first reference received power information is information on the received power value Pr1 of the power reception device 101 when the transmitted power value Pt1 of the power transmission device 102 is 250 milliwatts. The first reference received power information is a received power packet (mode 1) defined by the WPC standard, but may be any other message. The power transmission device 102 determines whether to accept the transmitted power value Pt1 and the received power value Pr1 as the calibration point 200. When they are accepted, the power transmission device 102 transmits a positive response = ACK to the power reception device 101, and otherwise transmits a negative response = NAK to the power reception device 101.

In step F610, the power reception device 101 receives an ACK from the power transmission device 102. In step F611 and subsequent steps, the power reception device 101 performs a process for transmitting, to the power transmission device 102, information (hereinafter referred to as second reference received power information) including the received power value Pr2 in the load-connected state. The load-connected state is a state of Connected Load, a maximum load state, or a load state in which the transmitted power value is equal to or greater than a second threshold. In the present embodiment, since GP is 5 watts, the second reference received power information is information on the received power value Pr2 of the power reception device 101 when the transmitted power value Pt2 of the power transmission device 102 is 5 watts. The second reference received power information is a received power packet (mode 2) defined by the WPC standard, but may be any other message.

In step F611, the power reception device 101 transmits a power transmission output change instruction including a positive value to increase the transmitted power to be transmitted from the power transmission device 102 to 5 watts. In step F612, the power transmission device 102 receives the power transmission output change instruction described above and determines whether it is possible to increase the transmitted power. In step F613, if it is possible to increase the transmitted power, the power transmission device 102 responds with an ACK and increases the transmitted power.

In step F614, the power reception device 101 again transmits a power transmission output change instruction including a positive value to increase the transmitted power to be transmitted from the power transmission device 102 to 5 watts. The power transmission device 102 receives the power transmission output change instruction described above and determines whether it is possible to increase the transmitted power. The second reference received power information is received power information when the transmitted power of the power transmission device 102 is 5 watts. In step F615, accordingly, if the transmitted power is 5 watts, the power transmission device 102 responds with an NAK in response to the power transmission output change instruction. As a result, the power transmission device 102 suppresses the transmission of power exceeding 5 watts. In step F616, the power reception device 101 determines that a transmitted power of 5 watts has been reached upon receiving an NAK from the power transmission device 102, and transmits information including the received power value Pr2 in the load-connected state to the power transmission device 102 as the second reference received power information.

In step F617, the power transmission device 102 calculates the amounts of power loss in the light-load state and the load-connected state based on the transmitted power values Pt1 and Pt2 of the power transmission device 102 and the received power values Pr1 and Pr2 included in the first and second reference received power information. The amounts of power loss are the amounts of power loss Ploss1 and Ploss2 between the power transmission device 102 and the power reception device 101. By interpolation between the amounts of power loss Ploss1 and Ploss2, the power transmission device 102 can calculate the amounts of power loss between the power transmission device 102 and the power reception device 101 for all transmitted powers (from 250 milliwatts to 5 watts) that the power transmission device 102 can take. In step F618, the power transmission device 102 transmits an ACK in response to the second reference received power information from the power reception device 101, and completes the calibration processing.

In step F619, the power transmission device 102 and the power reception device 101 perform communication for device authentication, and determine whether both devices can support a larger GP. In step F620, if it is determined that the power transmission device 102 and the power reception device 101 can support a larger GP, the power transmission device 102 and the power reception device 101 re-determine GP to be a larger value (e.g., 15 watts).

In step F621, the power reception device 101 transmits a power transmission output change instruction including a positive value to increase the transmitted power to be transmitted from the power transmission device 102 to 15 watts. In step F622, the power transmission device 102 receives the power transmission output change instruction described above, and if it is possible to increase the transmitted power, the power transmission device 102 responds with an ACK and increases the transmitted power.

In step F623, the power reception device 101 again transmits a power transmission output change instruction including a positive value to increase the transmitted power to be transmitted from the power transmission device 102 to 15 watts. In step F624, the power transmission device 102 receives the power transmission output change instruction described above, and if the transmitted power is 15 watts, the power transmission device 102 responds with an NAK in response to the power transmission output change instruction. In step F625, the power reception device 101 determines that a transmitted power of 15 watts has been reached upon receiving an NAK from the power transmission device 102, and transmits information including the received power value in the load-connected state to the power transmission device 102 as third reference received power information. That is, the calibration processing for a GP of 15 watts is performed again. The third reference received power information is information including the received power value in the load-connected state of the power reception device 101 when the transmitted power of the power transmission device 102 is 15 watts.

In step F626, the power transmission device 102 calculates three amounts of power loss on the basis of the transmitted power values (250 milliwatts, 5 watts, and 15 watts) of the power transmission device 102 and the received power values included in the first, second, and third reference received power information. The three amounts of power loss are amounts of power loss between the power transmission device 102 and the power reception device 101. By interpolation between these amounts of power loss, the power transmission device 102 can calculate the amounts of power loss between the power transmission device 102 and the power reception device 101 for all transmitted powers (from 250 milliwatts to 15 watts) that the power transmission device 102 can take. In step F627, the power transmission device 102 transmits an ACK in response to the third reference received power information from the power reception device 101, and completes the calibration processing. In step F628, the power transmission device 102 determines that the charging process of the power reception device 101 can be started, starts the process of transmitting power to the power reception device 101, and shifts to the Power Transfer phase.

In the Power Transfer phase, the power transmission device 102 transmits power to the power reception device 101. Further, the power transmission device 102 performs the foreign object detection using the power loss method. In the power loss method, first, the power transmission device 102 performs the calibration described above to calculate the amount of power loss between the power transmission device 102 and the power reception device 101 in the absence of a foreign object from the difference between the transmitted power value of the power transmission device 102 and the received power value of the power reception device 101. The calculated amount of power loss is an amount of power loss in a normal state (in the absence of a foreign object) during the power transmission process. When the amount of power loss between the power transmission device 102 and the power reception device 101, which is measured during power transmission after the calibration, deviates from the amount of power loss in the normal state by a threshold or more, the power transmission device 102 determines the "presence of a foreign object" or the "possible presence of a foreign object".

The foregoing description is directed to the power loss method. The power loss method is for detecting a foreign object on the basis of the measurement result of the amount of power loss during transmission of power from the power transmission device 102 to the power reception device 101. The foreign object detection using the power loss method has the drawback of reducing the accuracy of foreign object detection during transmission of large power from the power transmission device 102, but has the advantage of keeping the power transmission efficiency high because it enables foreign object detection while continuing the transmission of power.

As described above, the foreign object detection using the power loss method can be performed during the Power Transfer phase. However, the foreign object detection using the power loss method alone may result in possible erroneous detection of a foreign object or possible erroneous determination of the absence of a foreign object although a foreign object is present. In particular, the Power Transfer phase is a phase in which the power transmission device 102 transmits power. If a foreign object is present near the power transmission device 102 and the power reception device 101 during power transmission, heat generation or the like from the foreign object increases. Therefore, it is desirable to improve the accuracy of foreign object detection in this phase. In the present embodiment, accordingly, to improve the accuracy of foreign object detection, a foreign object detection method different from the power loss method is considered to be performed.

[Foreign Object Detection Method Using Waveform Decay Method]

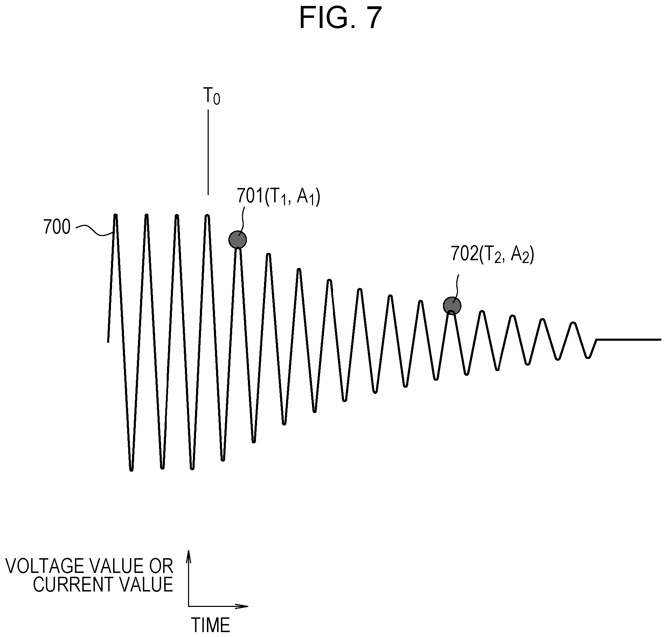

In the Power Transfer phase, the power transmission device 102 is transmitting power to the power reception device 101. Thus, if a foreign object can be detected using a power transmission waveform (waveform of the voltage or waveform of the current) related to the transmission of power, foreign object detection can be performed without using a newly defined foreign object detection signal or the like. A method for performing foreign object detection based on a decay state of the power transmission waveform (hereinafter referred to as a waveform decay method) will be described with reference to Fig. 7.

Fig. 7 is a diagram illustrating the principle of foreign object detection using the waveform decay method. Foreign object detection using a power transmission waveform related to transmission of power from the power transmission device 102 to the power reception device 101 will be described by way of example. In Fig. 7, a waveform indicates a change with time of a voltage value 700 of a high-frequency voltage applied to the power transmission antenna 305 of the power transmission device 102 (hereinafter simply referred to as a voltage value). In Fig. 7, the horizontal axis represents time, and the vertical axis represents voltage value. The power transmission device 102, which is transmitting power to the power reception device 101 via the power transmission antenna 305, stops power transmission at time T0. That is, at time T0, the supply of power from the power supply unit 302 for power transmission is stopped. The frequency of the power transmission waveform related to transmission of power from the power transmission device 102 is a predetermined frequency, for example, a fixed frequency between 85 kHz and 205 kHz to be used in the WPC standard. A point 701 is a point on the envelop of the high-frequency voltage, and represents a voltage value at time $T_1$. In Fig. 7, $(T_1, A_1)$ indicates that the voltage value at time T indicates $A_1$. Likewise, a point 702 is a point on the envelop of the high-frequency voltage, and represents a voltage value at time $T_2$. In Fig. 7, $(T_2, A_2)$ indicates that the voltage value at time $T_2$ indicates $A_2$. The quality factor (Q-factor) of the power transmission antenna 305 can be obtained based on the change with time of the voltage value after time $T_0$. For example, the Q-factor is calculated by (Equation 1), based on the times, the voltage values, and the frequencies f of the high-frequency voltages at the points 701 and 702 on the envelope of the voltage value.

$$Q = \pi f(T_2 - T_1)/\ln(A_1/A_2) \quad \text{(Equation 1)}$$

When a foreign object is present near the power transmission device 102 and the power reception device 101, the Q-factor decreases. This is because in the presence of a foreign object, the foreign object causes energy loss. Accordingly, focusing on the slope of the decay of the voltage value, in the presence of a foreign object, the slope of a straight line connecting the point 701 and the point 702 is steeper and the decay rate of the amplitude of the waveform is higher than in the absence of a foreign object, because energy loss due to the foreign object occurs. That is, the waveform decay method is for determining the presence or absence of a foreign object on the basis of the decay state of the voltage value between the point 701 and the point 702, and in actual determination of the presence or absence of a foreign object, the determination can be made by comparing some numerical values representing the decay state. For example, the determination can be made using the Q-factor described above. A decrease in Q-factor means an increase in waveform decay rate (degree of decrease in the amplitude of the waveform per unit time). Alternatively, the determination may be made using the slope of the straight line connecting the point 701 and the point 702, which is determined from $(A_1 - A_2)/(T_2 - T_1)$. Alternatively, if the times ($T_1$ and $T_2$) for observing the decay state of the voltage value are fixed, the determination can be made using a value representing the voltage value difference ($A_1 - A_2$) or a value representing the voltage value ratio ($A_1/A_2$).

Alternatively, if the voltage value $A_1$ immediately after the power transmission is stopped is constant, the determination can be made using a value of the voltage value $A_2$ after a predetermined time has elapsed. Alternatively, the determination may be made using a value of the time ($T_2 - T_1$) taken for the voltage value $A_1$ to reach the predetermined voltage value $A_2$.

In Fig. 7, when the value of current flowing through the power transmission antenna 305 is plotted on the vertical axis, as in the voltage value, the decay state of the current value during the power transmission stop period changes in accordance with the presence or absence of a foreign object. In the presence of a foreign object, the waveform decay rate is higher than in the absence of a foreign object. Thus, even when the method described above is applied to the change with time of the value of the current flowing through the power transmission antenna 305, a foreign object can be detected.

That is, the Q-factor determined from the current waveform, the slope of the decay of the current value, the current value difference, the current value ratio, the absolute value of the current value, the time taken to reach a predetermined current value, and the like are used as waveform decay indices to determine the presence or absence of a foreign object, thereby detecting a foreign object. Alternatively, foreign object detection may be performed based on both the decay state of the voltage value and the decay state of the current value, such that the presence or absence of a foreign object is determined using an evaluation value calculated from the waveform decay indices of the voltage value and the waveform decay indices of the current value. In the example described above, the waveform decay indices in the period during which the power transmission device 102 temporarily stops power transmission are measured, but this is not limited thereto. The waveform decay indices in the period during which the power transmission device 102 temporarily reduces the power to be supplied from the power supply unit 302 from a predetermined power level to a lower power level may be measured.

A method for performing foreign object detection using the waveform decay method on the basis of a power transmission waveform during power transmission will be described. In a transient response period immediately after the power transmission device 102 starts power transmission, the power transmission waveform is not stable. Thus, the power reception device 101 performs control not to perform communication (communication by load modulation) with the power transmission device 102 in the transient response period during which the power transmission waveform is not stable. The power transmission device 102 performs control not to perform communication (communication by frequency shift keying) with the power reception device 101.

At the timing of performing foreign object detection, the power transmission device 102 temporarily stops power transmission. Then, the amplitude of the power transmission waveform decays in the foreign object detection period during which the power transmission is stopped. Thus, the power transmission device 102 calculates the waveform decay rate of the decayed waveform. If the calculated waveform decay rate exceeds a predetermined threshold, the power transmission device 102 determines that a foreign object is present. After the predetermined foreign object detection period has elapsed, the power transmission device 102 resumes power transmission unless a foreign object is detected. After resumption of the power transmission, the power transmission device 102 repeatedly executes the processes described above, namely, standby in the transient response period, determination of the foreign object detection timing, stop of the power transmission, and the foreign object detection process. The foregoing description is directed to the basic process for the foreign object detection using the waveform decay method. The power transmission need not be completely stopped if the waveform decay rate can be acquired. For example, the power to be transmitted may be limited such that the power to be transmitted is reduced to a value close to zero.

In the measurement of the waveform decay rate of the power transmission waveform, if elements such as the power reception unit 403, the charging unit 406, and the battery 407 are connected to the power reception antenna 405 and the resonant capacitor 411 of the power reception device 101, the waveform decay rate of the decayed waveform is affected by the load of these elements. That is, the waveform decay rate changes depending on the states of the power reception unit 403, the charging unit 406, and the battery 407. Accordingly, it is difficult to distinguish whether a high waveform decay rate is affected by the presence of a foreign object or the change in the states of the power reception unit 403, the charging unit 406, the battery 407, and the like. Therefore, in foreign object detection by observing the waveform decay rate, the switch unit 409 may be disconnected. This can eliminate the influence of the battery 407. Alternatively, the switch unit 410 may be turned on and short-circuited to allow a current to flow through a closed loop formed by the power reception antenna 405, the resonant capacitor 411, and the switch unit 410. This can eliminate the influence of the power reception unit 403, the charging unit 406, and the battery 407. As described above, foreign object detection is performed when the switch unit 409 in disconnected state or when the switch unit 410 is turned on and short-circuited (connected), thereby enabling accurate foreign object detection. Both the disconnection of the switch unit 409 and the short-circuiting (connection) of the switch unit 410 also enable accurate foreign object detection. The "switch unit 409 being in disconnected state", described above, may be used interchangeably with the load being in the "state of Light Load (light-load state)" to achieve similar advantages.

In the measurement of the waveform decay rate of the power transmission waveform, furthermore, if elements such as the power transmission unit 303, the communication unit 304, and the power supply unit 302 are connected to the power transmission antenna 305 and the resonant capacitor 307 of the power transmission device 102, the waveform decay rate of the decayed waveform is affected by these elements. That is, the waveform decay rate changes depending on the states of the power transmission unit 303, the communication unit 304, and the power supply unit 302. Accordingly, it is difficult to distinguish whether a high waveform decay rate is affected by the presence of a foreign object or affected by the power transmission unit 303, the communication unit 304, and the power supply unit 302. Accordingly, in the measurement of the waveform decay rate, the switch unit 308 may be turned on and short-circuited to allow a current to flow through a closed loop formed by the power transmission antenna 305, the resonant capacitor 307, and the switch unit 308. This can eliminate the influence of the power transmission unit 303, the communication unit 304, and the power supply unit 302. Alternatively, a switch unit may be provided between the power transmission unit 303 and a closed loop circuit formed by the power transmission antenna 305, the resonant capacitor 307, and the switch unit 308. To perform foreign object detection, the switch unit disconnects the closed loop circuit from the power transmission unit 303. This can eliminate the influence of the power transmission unit 303, the communication unit 304, and the power supply unit 302. As described above, foreign object detection is performed when the switch unit 308 is turned on and short-circuited (connected) or when the closed loop circuit remains disconnected from the power transmission unit 303 by the switch unit, thereby enabling accurate foreign object detection. Both the turning on and short-circuiting (connection) of the switch unit 308 and the disconnection of the closed loop circuit from the power transmission unit 303 by the switch unit also enable accurate foreign object detection.

[Method of Setting Foreign Object Detection Threshold in Waveform Decay Method]

A method of setting a threshold of a waveform decay index for determining the presence or absence of a foreign object in the foreign object detection using the waveform decay method described above will be described.

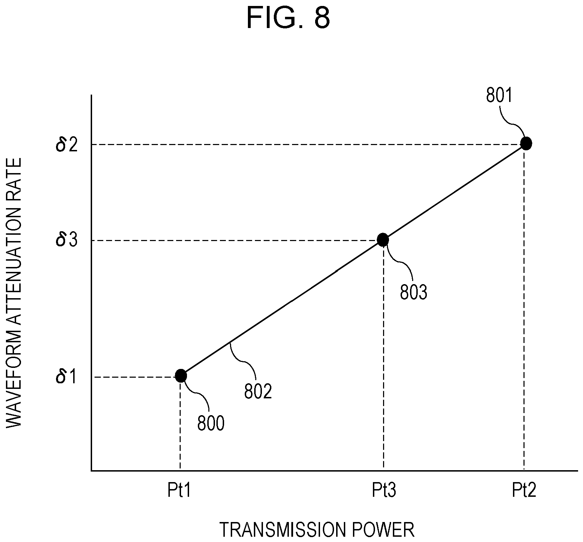

Fig. 8 is a diagram illustrating foreign object detection in the waveform decay method. First, in response to transmission of power from the power transmission device 102, the power reception device 101 controls the load of the power reception device 101 to be in the light-load state such no power or only very small power is supplied to the load of the power reception device 101. The transmitted power value of the power transmission device 102 at this time is denoted by Pt1. Then, the power transmission device 102 stops power transmission in this state and measures the waveform decay rate. The waveform decay rate at this time is denoted by $\delta 1$. At this time, the power transmission device 102 recognizes the transmitted power value Pt1 of the power transmitted from the power transmission device 102 and stores a calibration point 800 that associates the transmitted power value Pt1 with the waveform decay rate $\delta 1$ in the memory 306. Next, in response to transmission of power from the power transmission device 102, the power reception device 101 controls the load of the power reception device 101 to be in the load-connected state such that maximum power or power equal to or greater than a predetermined threshold is supplied to the load of the power reception device 101. The transmitted power of the power transmission device 102 at this time is denoted by Pt2. Then, the power transmission device 102 stops power transmission in this state and measures the waveform decay rate. The waveform decay rate at this time is denoted by $\delta 2$. At this time, the power transmission device 102 stores a calibration point 801 that associates the transmitted power value Pt2 with the waveform decay rate $\delta 2$ in the memory 306. Subsequently, the power transmission device 102 performs linear interpolation between the calibration point 800 and the calibration point 801 to create a straight line 802. The straight line 802 indicates the relationship between the transmitted power value and the waveform decay rate of the power transmission waveform when no foreign object is present near the power transmission device 102 and the power reception device 101. The power transmission device 102 can estimate, from the straight line 802, the waveform decay rate of the power transmission waveform for each transmitted power value in the absence of a foreign object. For example, when the transmitted power value is Pt3, the waveform decay rate can be estimated to be $\delta 3$ from a point 803 on the straight line 802 corresponding to the transmitted power value Pt3. Then, based on the estimation result described above, the power transmission device 102 can calculate a threshold used to determine the presence or absence of a foreign object for each transmitted power value. For example, a waveform decay rate that is larger than the estimation result of the waveform decay rate at a certain transmitted power value in the absence of a foreign object by a predetermined value (a value corresponding to a measurement error) may be set as the threshold for determining the presence or absence of a foreign object. The power transmission device 102 and the power reception device 101 perform calibration processing to allow the power transmission device 102 to acquire the combinations of transmitted power values and waveform decay rates. Such calibration processing is hereinafter referred to as "waveform decay method based calibration processing (CAL processing)".

The power reception device 101 may control the load to be in a non-power-supply state/light-load state and control the load to be in the load-connected state after notifying the power transmission device 102 that such controls are to be performed. Further, either of the two controls may be performed first.

The operation for calculating the threshold used to determine the presence or absence of a foreign object for each load (for each transmitted power value) described in the present embodiment may be performed in the Calibration phase. As described above, in the Calibration phase, the power transmission device 102 acquires data necessary for performing the foreign object detection using the power loss method. At this time, the power transmission device 102 acquires data related to the amounts of power loss in a case where the load state of the power reception device 101 is the light-load state and in a case where the load state of the power reception device 101 is the load-connected state. The calibration point 800 and the calibration point 801 illustrated in Fig. 8 may be measured, in the Calibration phase described above, concurrently with the measurement of the amounts of power loss when the power reception device 101 is set to the light-load state and when the power reception device 101 is set to the load-connected state. That is, upon receiving the first reference received power information from the power reception device 101, the power transmission device 102 performs measurement of the calibration point 800 in addition to predetermined processing to be performed in the Calibration phase. Further, upon receiving the second reference received power information from the power reception device 101, the power transmission device 102 performs measurement of the calibration point 801 in addition to predetermined processing to be performed in the Calibration phase. This eliminates the need for separately providing periods for measuring the calibration point 800 and the calibration point 801, enabling the calibration point 800 and the calibration point 801 to be measured in a shorter time.

For example, when the Q-factor determined by (Equation 1) is used as a "waveform decay index", the threshold may be set based on the reference quality factor value described above. The reference quality factor value is included in the FOD status packet to be transmitted from the power reception device 101 to the power transmission device 102. The reference quality factor value is a Q-factor that can be measured at a terminal of a power transmission antenna of a test power transmission device when a power reception device is placed on the test power transmission device and no foreign object is present nearby. The reference quality factor value is physically synonymous with the Q-factor calculated by (Equation 1), which is a waveform decay index, and can thus be used to set the threshold.

[First Method for Measuring Coupling State between Power Transmission Antenna and Power Reception Antenna]

Wireless power transfer involves transmission of power through electromagnetic coupling between the power transmission antenna 305 and the power reception antenna 405. That is, an AC current is caused to flow through the power transmission antenna 305 to change the magnetic flux penetrating the power reception antenna 405, thereby inducing a voltage in the power reception antenna 405 to transmit power. Examples of the index representing the coupling state between the power transmission antenna 305 and the power reception antenna 405 include a coupling coefficient. For example, when all (100%) of the magnetic flux generated by the power transmission antenna 305 penetrates the power reception antenna 405, the coupling coefficient k is expressed by "k = 1". For example, when 70% of the magnetic flux generated by the power transmission antenna 305 penetrates the power reception antenna 405, the coupling coefficient k is expressed by "k = 0.7". In this case, the remaining magnetic flux (30%) generated by the power transmission antenna 305 leads to leakage magnetic flux (leakage flux), which is a portion of the magnetic flux generated by the power transmission antenna 305 that does not penetrate the power reception antenna 405.

That is, when the coupling state is good and the value of the coupling coefficient is large, the transmission efficiency of power to be transmitted from the power transmission device 102 to the power reception device 101 is high. On the other hand, when the coupling state is poor and the value of the coupling coefficient is small, the transmission efficiency of power to be transmitted from the power transmission device 102 to the power reception device 101 is low.

The factors of the poor coupling state (a small value of the coupling coefficient) may include intrusion of a foreign object (such as a metal piece) between the power transmission antenna 305 and the power reception antenna 405, and a position shift between the power transmission antenna 305 and the power reception antenna 405. In response to intrusion of a foreign object between the power transmission antenna 305 and the power reception antenna 405, heat may be generated by the foreign object. In response to a position shift between the power transmission antenna 305 and the power reception antenna 405, as described above, the leakage magnetic flux (leakage flux) increases, which may cause large noise in the surroundings. Thus, if the coupling state is poor (the value of the coupling coefficient is small), appropriate control is performed, which enables realization of safer and higher-quality wireless power transfer.

In the present embodiment, to improve the accuracy of detection of a foreign object between the power transmission antenna 305 and the power reception antenna 405 and detect a position shift between the power transmission antenna 305 and the power reception antenna 405, the coupling state between the power transmission antenna 305 and the power reception antenna 405 is detected. The coupling state is, for example, a coupling coefficient. The following describes a method for measuring the coupling state (coupling coefficient) between the power transmission antenna 305 and the power reception antenna 405.

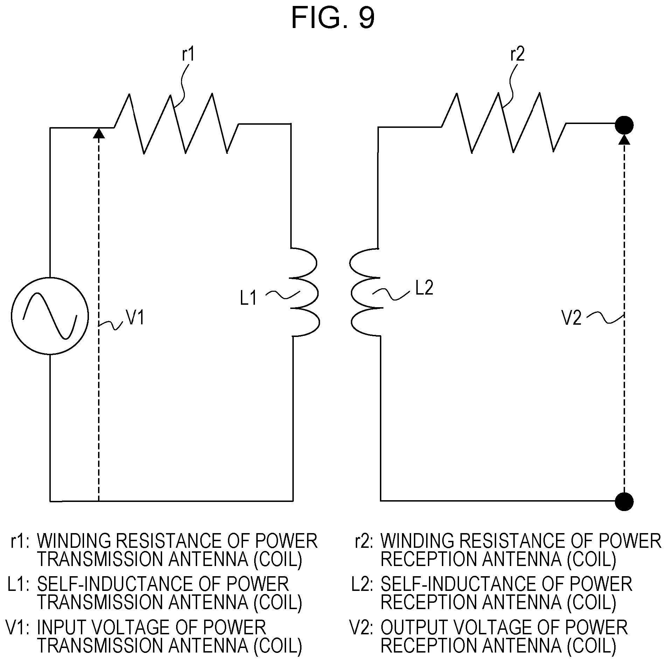

Fig. 9 is a diagram illustrating an example of equivalent circuits of the power transmission antenna (coil) 305 and the power reception antenna (coil) 405. A resistance r1 is the winding resistance of the power transmission antenna 305. A self-inductance L1 is the self-inductance of the power transmission antenna 305. A voltage V1 is the input voltage of the power transmission antenna 305. A resistance r2 is the winding resistance of the power reception antenna 405. A self-inductance L2 is the self-inductance of the power reception antenna 405. A voltage V2 is the output voltage of the power reception antenna 405. In this case, the coupling coefficient k representing the coupling state between the power transmission antenna 305 and the power reception antenna 405 is determined by (Equation 2).

$$k = (V2/V1)\sqrt{(L1/L2)} \quad (Equation2)$$

Accordingly, in a case where the power transmission device 102 is to calculate the coupling coefficient, the power reception device 101 notifies the power transmission device 102 of the voltage V2 applied to the power reception antenna 405, which is measured by the power reception device 101, and the value of the self-inductance L2 of the power reception antenna 405, which is held in the power reception device 101 in advance. Then, the power transmission device 102 acquires the voltage V1 applied to the power transmission antenna 305, which is measured by the power transmission device 102, and the value of the self-inductance L1 of the power transmission antenna 305, which is held in the power transmission device 102 in advance. The power transmission device 102 can calculate the coupling coefficient k by using the voltage V1, the value of the self-inductance L1, the voltage V2 received from the power reception device 101, and the value of the self-inductance L2 of the power reception antenna 405. Alternatively, the power reception device 101 may notify the power transmission device 102 of a constant calculated using all or some of the voltage V1 and the self-inductances L1 and L2, and the power transmission device 102 may calculate the coupling coefficient k by using the constant and the voltage V2.

On the other hand, in a case where the power reception device 101 is to calculate the coupling coefficient, the power transmission device 102 notifies the power reception device 101 of the voltage V1 applied to the power transmission antenna 305, which is measured by the power transmission device 102, and the value of the self-inductance L1 of the power transmission antenna 305, which is held in the power transmission device 102 in advance. Then, the power reception device 101 acquires the voltage V2 applied to the power reception antenna 405, which is measured by the power reception device 101, and the value of the self-inductance L2 of the power reception antenna 405, which is held in the power reception device 101 in advance. The power reception device 101 can calculate the coupling coefficient k by using the voltage V1, the value of the self-inductance L2, and the voltage V1 and the value of the self-inductance L1, which are received from the power transmission device 102. Alternatively, the power transmission device 102 may notify the power reception device 101 of a constant calculated using all or some of the voltage V2 and the self-inductances L1 and L2, and the power reception device 101 may calculate the coupling coefficient k by using the constant and the voltage V1.

The voltage V1 applied to the power transmission antenna 305, described above, may be obtained by the power transmission device 102 actually measuring the voltage V1 applied to the power transmission antenna 305, or the voltage V1 may be calculated from a set value of the transmitted power to be transmitted by the power transmission device 102. Alternatively, the voltage V1 may be set as a transmission voltage value set at the time of power transmission. Alternatively, the voltage V1 applied to the power transmission antenna 305 may be determined from a voltage V3 applied to a circuit (e.g., the inverter) included in the power transmission unit 303 of the power transmission device 102 and the voltage applied to both ends of the resonant capacitor 411. In this case, the voltage V3 applied to the circuit (e.g., the inverter) included in the power transmission unit 303 of the power transmission device 102 may also be calculated from a set value of the transmitted power to be transmitted by the power transmission device 102.

In a case where the power transmission device 102 or the power reception device 101 is to perform the measurement described above, the power reception device 101 may control the switch unit 413 to be turned off to bring the terminal of the power reception antenna 405 into the opened state. Accordingly, as illustrated in Fig. 9, both ends of the power reception antenna 405 can be brought into the opened state.

In addition, accordingly, the measurement described above is performed without being affected by the resonant capacitor 411, the power reception unit 403, the charging unit 406, and the battery 407. As a result, the coupling state (coupling coefficient) between the power transmission antenna 305 and the power reception antenna 405 can be measured with higher accuracy.

In the foregoing description, the "coupling coefficient" is used as an index representing the coupling state between the power transmission antenna 305 and the power reception antenna 405. However, the index representing the coupling state between the power transmission antenna 305 and the power reception antenna 405 is not limited to the "coupling coefficient", and there are multiple values representing the coupling state. The values representing the coupling state between the power transmission antenna 305 and the power reception antenna 405 are referred to as "coupling state indices" in the present embodiment. For example, the "coupling coefficient" as described above is included in the "coupling state indices". Each of the coupling state indices is a value corresponding to the coupling state between the power transmission antenna 305 and the power reception antenna 405. The present embodiment can also be applied when a coupling state index other than the coupling coefficient is used.

The coupling state index representing the coupling state between the power transmission antenna 305 and the power reception antenna 405 may be calculated by another method. For example, the coupling state between the power transmission antenna 305 and the power reception antenna 405 may be calculated by using the voltage V3 applied to the circuit (e.g., the inverter) included in the power transmission unit 303 of the power transmission device 102 and a voltage V4 applied to a circuit (e.g., the rectifier) included in the power reception unit 403 of the power reception device 101. In this case, the power transmission device 102 notifies the power reception device 101 of the voltage V3, thereby enabling the power reception device 101 to calculate the index representing the coupling state between the power transmission antenna 305 and the power reception antenna 405. At this time, the power transmission device 102 may notify the power reception device 101 of a constant including the characteristics of the self-inductance L1, and the power reception device 101 may calculate, based on the constant, the index representing the coupling state between the power transmission antenna 305 and the power reception antenna 405.

Likewise, the power reception device 101 notifies the power transmission device 102 of the voltage V4, thereby enabling the power transmission device 102 to calculate the coupling state index between the power transmission antenna 305 and the power reception antenna 405. At this time, the power reception device 101 may notify the power transmission device 102 of a constant including the characteristics of the self-inductance L2, and the power transmission device 102 may calculate, based on the constant, the coupling state index between the power transmission antenna 305 and the power reception antenna 405.

In a case where the power transmission device 102 or the power reception device 101 is to perform the measurement described above, the power reception device 101 may control the switch unit 413 to be turned off to bring a terminal of a circuit formed by the power reception antenna 405 and the resonant capacitor 411 into the opened state. Accordingly, the measurement described above is performed without being affected by the power reception unit 403, the charging unit 406, and the battery 407. Thus, the coupling state (coupling coefficient) between the power transmission antenna 305 and the power reception antenna 405 can be measured with higher accuracy.

[Second Method for Measuring Coupling State between Power Transmission Antenna and Power Reception Antenna]

The following describes a second method for measuring the coupling state (coupling coefficient) between the power transmission antenna 305 and the power reception antenna 405. The coupling coefficient k representing the coupling state between the power transmission antenna 305 and the power reception antenna 405 is determined by (Equation 3).

$$k = \sqrt{(1 - Lsc/Lopen)} \quad (Equation\ 3)$$

Here, Lsc is an inductance value of the power transmission antenna 305 when both ends of the power reception antenna 405 are short-circuited. Lsc can be measured by, for example, measuring the inductance value of the power transmission antenna 305 with the switch unit 413 turned on (short-circuited) and the switch unit 410 between the switch unit 413 and the resonant capacitor 411 turned on (short-circuited). The inductance value of the power transmission antenna 305 can be determined from a voltage V5 input to the power transmission antenna 305 and a current I1 flowing through the power transmission antenna 305.

Further, Lopen is an inductance value of the power transmission antenna 305 when both ends of the power reception antenna 405 are opened. Lopen can be measured by, for example, measuring the inductance value of the power transmission antenna 305 with the switch unit 413 turned off (opened). The inductance value of the power transmission antenna 305 can be determined from a voltage V6 input to the power transmission antenna 305 and a current I2 flowing through the power transmission antenna 305.

The coupling state index between the power transmission antenna 305 and the power reception antenna 405 can be determined by the voltage input to the power transmission antenna 305 and the current flowing through the power transmission antenna 305 when both ends of the power reception antenna 405 are short-circuited and by the voltage input to the power transmission antenna 305 and the current flowing through the power transmission antenna 305 when both ends of the power reception antenna 405 are opened.

The power transmission device 102 can calculate an index (including a coupling coefficient) representing the coupling state between the power transmission antenna 305 and the power reception antenna 405 on the basis of a voltage applied to a circuit (e.g., the inverter) included in the power transmission unit 303 and a current flowing through the circuit (e.g., the inverter) included in the power transmission unit 303. The voltage V5 or V6 described above may be a voltage applied to a circuit (e.g., the inverter) included in the power transmission unit 303 or may be a voltage applied to the power transmission antenna 305. Alternatively, the voltage V5 or V6 described above may be a voltage applied to both terminals of the series resonant circuit including the power transmission antenna 305 and the resonant capacitor 307. Alternatively, a voltage applied to a circuit (e.g., the inverter) included in the power transmission unit 303 and a voltage applied to both ends of the resonant capacitor 411 may be measured, and the voltage applied to the power transmission antenna 305 may be calculated from the measurement results. That is, the coupling state index (coupling coefficient) between the power transmission antenna 305 and the power reception antenna 405 can be determined from measurement results of the voltage applied to the circuit (e.g., the inverter) included in the power transmission unit 303 and the voltage applied to both ends of the resonant capacitor 411. In this case, the voltage applied to the circuit (e.g., the inverter) included in the power transmission unit 303 may also be calculated from a set value of the transmitted power to be transmitted by the power transmission device 102.

The current I1 or I2 described above may be a current flowing through a circuit (e.g., the inverter) included in the power transmission unit 303 or may be a current flowing through the power transmission antenna 305. The "opened" and "short-circuited" states of the power reception antenna 405 may be implemented by the switch unit 410 and the switch unit 413, which are controlled by the control unit 401, or may be implemented by the power reception unit 403. Alternatively, the "short-circuited" state of the power reception antenna 405 may be the state of Light Load (light-load state) described above.

In this measurement method, the power transmission device 102 measures the voltage V5 or V6 and the current I1 or I2. Accordingly, the power transmission device 102 can calculate an index (including a coupling coefficient) representing the coupling state between the power transmission antenna 305 and the power reception antenna 405. That is, the voltage value measured by the power reception device 101, the inductance value of the power reception antenna 405, and the like are not necessary, and the power reception device 101 is not required to notify information on such values to the power transmission device 102. However, when the power transmission device 102 is to measure the voltage V5 and the current I1, the power reception device 101 needs to open both terminals of a circuit including the power reception antenna 405. When the power transmission device 102 is to measure the voltage V6 and the current I2, the power reception device 101 needs to short-circuit both terminals of the circuit including the power reception antenna 405. That is, the power reception device 101 needs to perform appropriate control to open or short-circuit both terminals of the circuit including the power reception antenna 405 in accordance with the timing at which the power transmission device 102 measures the voltage and the current. The timing may be determined by the power transmission device 102 and notified to the power reception device 101, or may be determined by the power reception device 101 and notified to the power transmission device 102. The notification may be performed by communication performed between the communication unit 304 included in the power transmission device 102 and the communication unit 404 included in the power reception device 101 in accordance with the WPC standard. Alternatively, the notification may be performed by communication performed between the communication unit 309 included in the power transmission device 102 and the communication unit 412 included in the power reception device 101 in accordance with a standard different from the WPC standard. Examples of the communication according to a standard different from the WPC standard include communication via wireless LAN, Bluetooth (registered trademark), Low Energy (BLE), and near field communication (NFC).

[Method of Setting State Abnormality Detection Threshold Using Coupling State between Power Transmission Antenna and Power Reception Antenna]

The wireless power transfer system 100 performs state abnormality detection such as detection of a foreign object between the power transmission antenna 305 and the power reception antenna 405 and detection of a position shift between the power transmission antenna 305 and the power reception antenna 405. A method of setting a threshold for the coupling state (including the coupling coefficient) between the power transmission antenna 305 and the power reception antenna 405 for determining the presence or absence of a state abnormality in this case will be described.

The following describes a method of setting the threshold. For a coupling state index used for detecting the presence or absence of a state abnormality between the power transmission antenna 305 and the power reception antenna 405, the presence of the state abnormality, the possible presence of the state abnormality, the absence of the state abnormality, or the like is determined. The threshold for the coupling state index in this case is a coupling state index in the absence of the state abnormality. For example, a coupling state index between a test power transmission device including a power transmission antenna and a power reception device including a power reception antenna in a case where the power reception device is placed on the test power transmission device and no state abnormality occurs between the power transmission antenna and the power reception antenna can be set as the threshold. That is, the power reception device 101 holds the coupling state index, which is measured in advance, in the memory 408 and notifies the power transmission device 102 of the coupling state index, and, as a result, the power transmission device 102 can set the coupling state index as the threshold.

[Processing of Power Transmission Device in Application of Waveform Decay Method to WPC Standard]

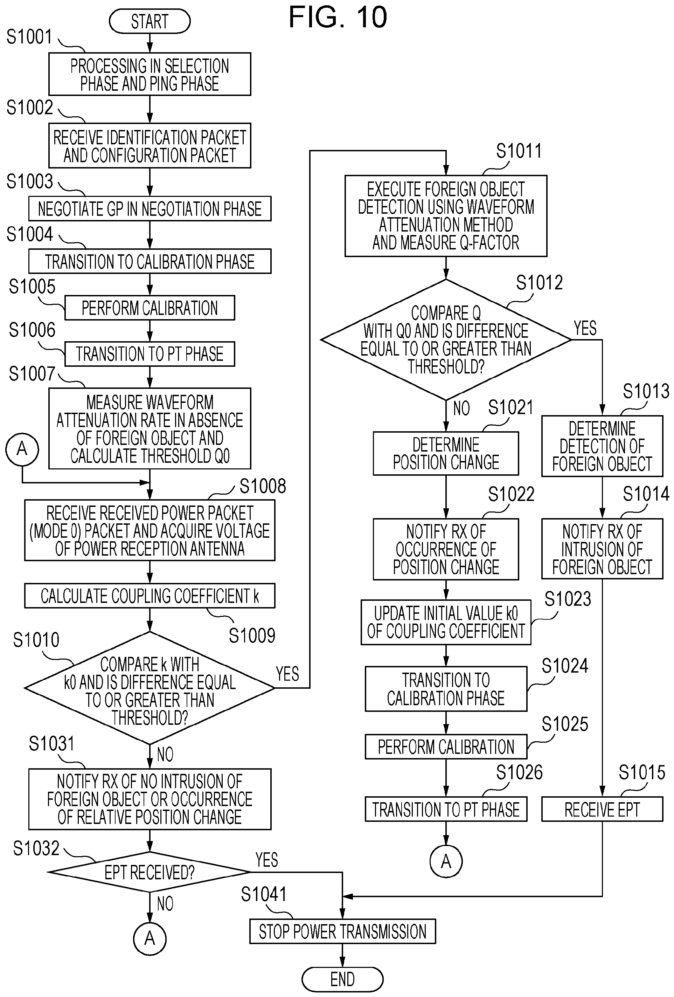

Fig. 10 is a flowchart illustrating a processing method of the power transmission device 102 in a case where foreign object detection is performed by applying the waveform decay method to the WPC standard. Differences from the WPC standard will mainly be described.

The measurement of the coupling state between the power transmission antenna 305 and the power reception antenna 405 and determination of whether to execute foreign object detection require a threshold serving as a reference for determining the presence/absence of a change in the coupling state. Here, an example will be described in which a coupling coefficient is used as the index for the coupling state between the power transmission antenna 305 and the power reception antenna 405, and a method for calculating an initial value k0 of the coupling coefficient will be described.

In step S1001, the power transmission device 102 performs the processing in the Selection phase and the Ping phase. In the Ping phase, the power transmission device 102 measures a voltage value Vtx0 of the power transmission antenna 305 during transmission of the digital ping, and records the voltage value Vtx0 in the memory 306. Further, the power transmission device 102 acquires a power reception voltage value VrxO of the power reception device 101 notified from the power reception device 101 by receiving a predetermined packet, and records the power reception voltage value VrxO in the memory 306. A signal strength packet can be used as the predetermined packet. The signal strength packet may include not only the power reception voltage value but also the received power value of the power reception device 101, or another signal strength packet may be used to notify the power transmission device 102 of the received power value of the power reception device 101.

In step S1002, the power transmission device 102 receives an identification packet and a configuration packet from the power reception device 101 in the I & C phase. In the I & C phase, the power transmission device 102 acquires an inductance value Lrx of the power reception antenna 405 notified from the power reception device 101 by receiving a predetermined packet and records the inductance value Lrx in the memory 306. An identification packet or an extended identification packet can be used as the predetermined packet.

In step S1003, in the Negotiation phase, the power transmission device 102 negotiates with the power reception device 101 for the value of GP and determines the value of GP. In step S1004, the power transmission device 102 transitions to the Calibration phase. In step S1005, the power transmission device 102 performs calibration. In step S1006, the power transmission device 102 transitions to the Power Transfer phase.

The power transmission device 102 calculates the initial state of the coupling state between the power transmission antenna 305 and the power reception antenna 405. The power transmission device 102 calculates the initial value k0 of the coupling coefficient between the power transmission antenna 305 and the power reception antenna 405 by using Vtx0, VrxO, and Lrx recorded in the memory 306 and the inductance value Ltx of the power transmission device 102 recorded in advance in the memory 306. The power transmission device 102 records the initial value k0 of the coupling coefficient in the memory 306. This calculation is desirably executed before the power transmission device 102 starts the process of calculating the coupling state between the power transmission antenna 305 and the power reception antenna 405.

Further, the foreign object detection using the waveform decay method requires a threshold as a reference for determining the presence/absence of a foreign object. Here, a method will be described in which the power transmission device 102 measures in advance the waveform decay rate in the absence of a foreign object and calculates the threshold with reference to the waveform decay rate. The power transmission device 102 performs the foreign object detection using the waveform decay method. Then, the power transmission device 102 determines the "presence of a foreign object" or the "possible presence of a foreign object" if the measured waveform decay rate is higher than the threshold, and determines the "absence of a foreign object" or the "possible absence of a foreign object" if the measured waveform decay rate is lower than the threshold.

The timing at which the waveform decay rate is measured in advance in the absence of a foreign object will be described. In the WPC standard, as described above, the power transmission device 102 performs the foreign object detection using the Q-factor measurement method in step S1003 in the Negotiation phase. As a result of the foreign object detection, if it is determined that no foreign object is present, the power transmission device 102 advances the process to steps S1004 and S1005 in the Calibration phase and step S1006 in the Power Transfer phase. That is, proceeding to the Negotiation phase and the subsequent phases means that it is determined that no foreign object is present as a result of the foreign object detection using the Q-factor measurement method. Accordingly, if the waveform decay rate is measured in any one of the Negotiation phase, the Calibration phase, and the Power Transfer phase, it is likely that the waveform decay rate can be measured in the absence of a foreign object. Thus, the timing of measuring the waveform decay rate in the absence of a foreign object is desirably any one of the Negotiation phase, the Calibration phase, and the Power Transfer phase.

In the present embodiment, the timing at which the waveform decay rate is measured in the absence of a foreign object is set in step S1007, which is the initial stage of the Power Transfer phase. This is because the probability that a foreign object is located near the power transmission device 102 and the power reception device 101 increases as time elapses after the absence of a foreign object is determined by using the Q-factor measurement method. Then, at the timing of performing foreign object detection, which is designated by the power reception device 101 or the power transmission device 102, the power transmission device 102 measures the waveform decay rate of the power transmission waveform in the absence of a foreign object and calculates a threshold Q0. The power transmission device 102 compares the Q-factor measured thereafter with the threshold Q0 described above, which is calculated from the waveform decay rate in the absence of a foreign object, and determines the presence or absence of a foreign object.

In the waveform decay method, the power transmission device 102 temporarily stops power transmission and detects a foreign object while observing the decay rate of the power transmission waveform. Thus, the waveform decay method has a drawback of reducing the power transmission efficiency due to the temporary stop of power transmission. By contrast, the waveform decay method has the advantage of providing high-accuracy foreign object detection even when the foreign object detection process is executed during transmission of large power. That is, even in a situation where it is difficult to accurately detect a foreign object by using the power loss method, the waveform decay method can be used to detect a foreign object.

In step S1007, the power transmission device 102 measures the waveform decay rate of the power transmission waveform in the absence of a foreign object, calculates the Q-factor of the power transmission antenna 305 from the waveform decay rate in accordance with (Equation 1), and sets the Q-factor as the threshold Q0.

In step S1008, the power transmission device 102 determines whether an instruction has been received from the power reception device 101 to perform foreign object detection. The instruction to perform foreign object detection can be implemented by a received power packet (mode 0). In the WPC standard, the received power packet includes information on the received power value of the power reception device 101. As used herein, the received power packet includes information on the power reception voltage value Vrx of the power reception device 101. The power reception voltage value Vrx is a voltage across both ends of the power reception antenna 405 of the power reception device (RX) 101. The power transmission device 102 receives the received power packet (mode 0) packet from the power reception device 101 and acquires the power reception voltage value Vrx of the power reception device 101. The power transmission device 102 records the acquired power reception voltage value Vrx in the memory 306. Further, the power transmission device 102 measures a power transmission voltage value Vtx of the power transmission device 102 and records the power transmission voltage value Vtx in the memory 306. The power transmission voltage value Vtx is a voltage across both ends of the power transmission antenna 305.

In step S1009, the power transmission device 102 calculates the current coupling state. Here, the power transmission device 102 calculates the coupling coefficient k between the power transmission antenna 305 and the power reception antenna 405. The power transmission device 102 calculates the coupling coefficient k by using Vtx, Vrx, Ltx, and Lrx in accordance with (Equation 2) and records the coupling coefficient k in the memory 306.

In step S1010, the power transmission device 102 determines whether the difference between the coupling coefficient k and the initial value k0 of the coupling coefficient, which has already been calculated, is equal to or greater than a preset threshold k_diff. If the difference is equal to or greater than the threshold k_diff (YES in S1010), the process proceeds to step S1011. If the difference is less than the threshold k_diff (NO in S1010), the process proceeds to step S1031.

In step S1011, the power transmission device 102 executes the foreign object detection using the waveform decay method and measures the Q-factor of the power transmission antenna 305 in accordance with (Equation 1). In step S1012, the power transmission device 102 compares the measured Q-factor with the threshold Q0 and determines whether the difference between the measured Q-factor and the threshold Q0 is equal to or greater than a preset threshold Q_diff. If the difference is equal to or greater than the threshold Q_diff (YES in S1012), the process proceeds to step S1013. If the difference is less than the threshold Q_diff (NO in S1012), the process proceeds to step S1021.

In step S1013, the power transmission device 102 determines the intrusion of a foreign object between the power transmission antenna 305 and the power reception antenna 405. In step S1014, the power transmission device 102 notifies the power reception device 101 of the intrusion of a foreign object by using a predetermined packet. For example, the power transmission device 102 transmits an NAK, which is a negative response, to the power reception device 101. In step S1015, the power transmission device 102 receives an end power transfer (EPT) packet, which is a power transmission stop command for requesting stop of power transmission, from the power reception device 101. In step S1041, the power transmission device 102 stops power transmission.

In step S1021, the power transmission device 102 determines that the relative position between the power transmission antenna 305 and the power reception antenna 405 has changed. In step S1022, the power transmission device 102 notifies the power reception device 101 that the relative position between the power transmission antenna 305 and the power reception antenna 405 has changed. For example, the power transmission device 102 first transmits an ACK, which is a positive response, to the power reception device 101, then transmits a request packet, and further transmits a request operation identification packet. The request packet is a packet indicating that the power transmission device 102 requests the power reception device 101 to perform an operation. The request operation identification packet is a packet including identification information for identifying the operation that the power reception device 101 is requested to perform by the power transmission device 102.

The identification information is a request to perform calibration again. The power transmission device 102 may perform the processing of step S1022 by using a single packet. That is, the power transmission device 102 may transmit, to the power reception device 101, a packet indicating that the power transmission device 102 requests the power reception device 101 to perform an operation and including identification information for identifying the requested operation.

Next, in step S1023, the power transmission device 102 updates the measured coupling coefficient k as the initial value k0 of the coupling coefficient. In step S1024, the power transmission device 102 transitions to the Calibration phase. In step S1025, the power transmission device 102 performs calibration. In step S1026, the power transmission device 102 transitions to the Power Transfer phase. Thereafter, the process returns to step S1008.

In step S1031, the power transmission device 102 determines that neither the intrusion of a foreign object nor the change in the relative position described above has occurred, and notifies the power reception device 101 of the result by using a predetermined packet. For example, the power transmission device 102 transmits an ACK, which is a positive response, to the power reception device 101 and continues power transmission. In step S1032, the power transmission device 102 determines whether an EPT packet has been received from the power reception device 101. If the power transmission device 102 has received an EPT packet (YES in S1032), the process proceeds to step S1041. If the power transmission device 102 has not received an EPT packet (NO in S1032), the process returns to step S1008. In step S1041, the power transmission device 102 stops power transmission.

[Processing of Power Reception Device in Application of Waveform Decay Method to WPC Standard]

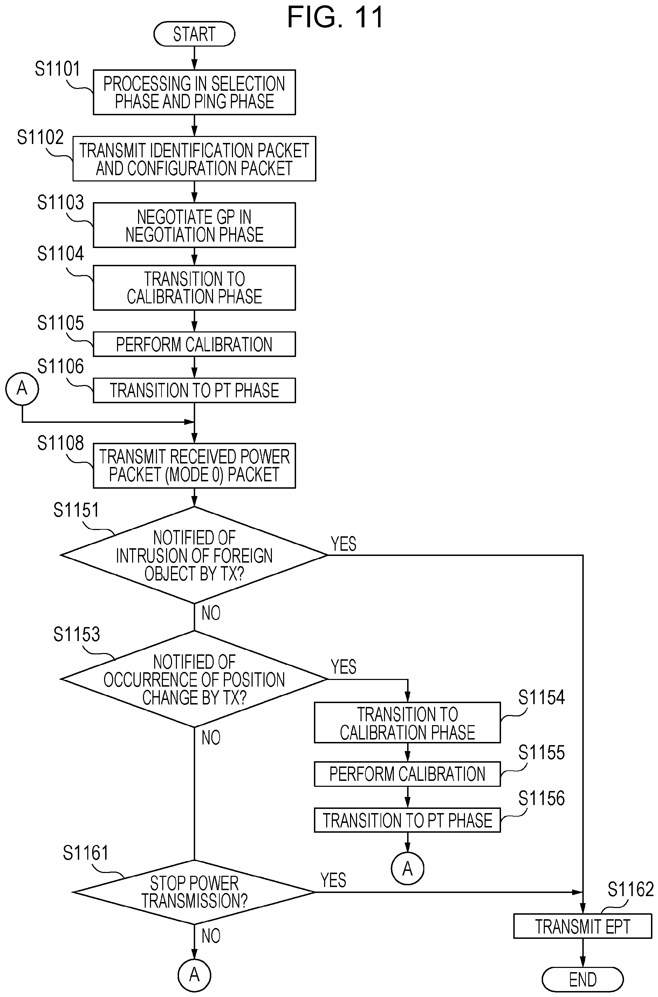

Fig. 11 is a flowchart illustrating a processing method of the power reception device 101 in a case where foreign object detection is performed by applying the waveform decay method to the WPC standard. Differences from the WPC standard will mainly be described.

The measurement of the coupling state between the power transmission antenna 305 and the power reception antenna 405 and determination of whether to execute foreign object detection require a threshold serving as a reference for determining the presence/absence of a change in the coupling state. Here, an example will be described in which a coupling coefficient is used as the index for the coupling state between the power transmission antenna 305 and the power reception antenna 405, and a method for exchanging information necessary for calculating the initial value $k_0$ of the coupling coefficient will be described.

In step S1101, the power reception device 101 performs the processing in the Selection phase and the Ping phase. In the Ping phase, the power reception device 101 receives the digital ping from the power transmission device 102 and measures the power reception voltage value VrxO. Then, the power reception device 101 notifies the power transmission device 102 of the power reception voltage value VrxO by using a predetermined packet. A signal strength packet can be used as the predetermined packet. The signal strength packet may include not only the power reception voltage value but also the received power value of the power reception device 101, or another signal strength packet may be used to notify the power transmission device 102 of the received power value of the power reception device 101.

In step S1102, the power reception device 101 transmits an identification packet and a configuration packet to the power transmission device 102 in the I & C phase. In the I & C phase, the power reception device 101 notifies the power transmission device 102 of the inductance value Lrx of the power reception antenna 405 by using a predetermined packet. An identification packet or an extended identification packet can be used as the predetermined packet.

In step S1103, in the Negotiation phase, the power reception device 101 negotiates with the power transmission device 102 for the value of GP. As described above, the foreign object detection using the Q-factor measurement method is performed in the Negotiation phase. As a result of the foreign object detection, if the power transmission device 102 determines that no foreign object is present, the process proceeds to step S1104.

In step S1104, the power reception device 101 transitions to the Calibration phase. In step S1105, the power reception device 101 performs calibration. In step S1106, the power reception device 101 transitions to the Power Transfer phase.

In step S1108, after transitioning to the Power Transfer phase, the power reception device 101 notifies the power transmission device 102 of an instruction to perform foreign object detection. The instruction to perform foreign object detection can be implemented by a received power packet (mode 0). In the WPC standard, the received power packet includes information on the received power value of the power reception device 101. As used herein, the received power packet includes information on the power reception voltage value Vrx of the power reception device 101.

In step S1151, the power reception device 101 determines whether the power reception device 101 has been notified by the power transmission device (TX) 102 of the intrusion of a foreign object by using a predetermined packet. The predetermined packet is, for example, an NACK, which is a negative response. If the power reception device 101 has been notified of the intrusion of a foreign object (YES in S1151), the process proceeds to step S1162. If the power reception device 101 has not been notified of the intrusion of a foreign object (NO in S1151), the process proceeds to step S1153.

In step S1153, the power reception device 101 determines whether the power reception device 101 has been notified by the power transmission device 102, by using a predetermined method, that the relative position between the power transmission antenna 305 and the power reception antenna 405 has changed. In the predetermined method, the power reception device 101 receives an ACK, which is a positive response, then receives a request packet, and further receives a request operation identification packet. The request packet and the request operation identification packet may be included in one packet. If the power reception device 101 has been notified that the change described above has made (YES in S1153), the process proceeds to step S1154. If the power reception device 101 has not been notified that the change described above has made (NO in S1153), the process proceeds to step S1161.

In step S1154, the power reception device 101 transitions to the Calibration phase. In step S1155, the power reception device 101 performs calibration. In step S1156, the power reception device 101 transitions to the Power Transfer phase. Thereafter, the process returns to step S1108.

In step S1161, the power reception device 101 determines whether to stop the transmission of power from the power transmission device 102. If power transmission is to be stopped (YES in S1161), the process proceeds to step S1162. If power transmission is not to be stopped (NO in S1161), the process returns to step S1108. In step S1162, the power reception device 101 transmits an EPT packet to the power transmission device 102 to request stop of power transmission.

In the embodiment described above, in the foreign object detection using the waveform decay method, the power transmission device 102 measures the waveform decay rate in the absence of a foreign object before the start of power transmission, and calculates the threshold Q0 with reference to the measured waveform decay rate. When the Q-factor measured for the foreign object detection using the waveform decay method is larger than the threshold Q0, the power transmission device 102 determines the "presence of a foreign object" or the "possible presence of a foreign object". When the measured Q-factor is less than the threshold Q0, the power transmission device 102 determines that the "absence of a foreign object" or the "possible absence of a foreign object".

The power transmission device 102 may perform foreign object detection by using a threshold determined from a waveform decay rate measured at the timing of estimating the absence of a foreign object after the start of power transmission. For example, the power transmission device 102 confirms that no foreign object is present during power transmission by using the power loss method. Next, the power transmission device 102 performs the first measurement of the waveform decay rate and calculates a threshold that is based on the measured waveform decay rate. Since the first measurement of the waveform decay rate is performed immediately after it is confirmed in advance by using the power loss method that no foreign object is present, the measured waveform decay rate is estimated to be a waveform decay rate in the absence of a foreign object. Next, the power transmission device 102 resumes power transmission, and performs the second measurement of the waveform decay rate at the timing of determining that foreign object detection is to be performed.

Then, the power transmission device 102 can compare the measurement result of the second measurement of the waveform decay rate with the measurement result of the first measurement of the waveform decay rate or the threshold calculated with reference to the measurement result to determine the presence or absence of a foreign object. That is, in the foreign object detection using the waveform decay method, the power transmission device 102 may compare the waveform decay rate measured at that point in time with the previous waveform decay rate measured in the absence of a foreign object or the threshold.

In the embodiment described above, furthermore, the frequency of the power transmission waveform related to the transmission of power from the power transmission device 102 is a fixed frequency, but this is not limited thereto. The power transmission device 102 may perform a process for foreign object detection described in the present embodiment at each of a plurality of frequencies and combine the results thereof to determine the presence or absence of a foreign object. The power transmission device 102 performs foreign object detection by using not only a waveform decay rate at one frequency but also waveform decay rates at a plurality of frequencies, thereby enabling higher-accuracy foreign object detection.

In the present embodiment, furthermore, since a power transmission waveform is unstable due to a transient response immediately after the power transmission device 102 stops power transmission or immediately after the power transmission device 102 starts power transmission, a standby time is provided before each operation starts. However, the unstable power transmission waveform is caused by sudden start or stop of power transmission. To mitigate the unstable power transmission waveform, therefore, the power transmission device 102 may perform control to increase the transmitted power in a stepwise manner at the time of start of power transmission. Alternatively, the power transmission device 102 may perform control to decrease the transmitted power in a stepwise manner at the time of stop of power transmission.

As described above, the power transmission device 102 wirelessly transmits power to the power reception device 101. Before the transition in step S1006, the power transmission device 102 functions as an acquisition unit and acquires the coupling state between the power transmission antenna 305 of the power transmission device 102 and the power reception antenna 405 of the power reception device 101. The coupling state is, for example, a coupling coefficient between the power transmission antenna 305 of the power transmission device 102 and the power reception antenna 405 of the power reception device 101 and is the initial value k0 of the coupling coefficient.

As expressed by (Equation 2), the initial value k0 of the coupling coefficient is a coefficient based on the inductance Ltx of the power transmission antenna 305, the voltage value Vtx0 of the power transmission antenna 305, the inductance Lrx of the power reception antenna 405, and the voltage value VrxO of the power reception antenna 405. The initial value k0 of the coupling coefficient may be a coefficient based on the number of turns of the power transmission antenna 305, the voltage value Vtx0 of the power transmission antenna 305, the number of turns of the power reception antenna 405, and the voltage value VrxO of the power reception antenna 405.

For example, the voltage value VrxO of the power reception antenna 405 and the inductance Lrx or the number of turns of the power reception antenna 405 are received from the power reception device 101. At least the voltage value VrxO of the power reception antenna 405 is received from the power reception device 101.

In step S1007, the power transmission device 102 functions as an acquisition unit, acquires the Q-factor of the power transmission antenna 305 by using the waveform decay method in accordance with (Equation 1), and sets the Q-factor as the threshold Q0.

In step S1009, the power transmission device 102 functions as an acquisition unit and acquires the coupling state between the power transmission antenna 305 of the power transmission device 102 and the power reception antenna 405 of the power reception device 101. The coupling state is, for example, the coupling coefficient k between the power transmission antenna 305 of the power transmission device 102 and the power reception antenna 405 of the power reception device 101.

As expressed by (Equation 2), the coupling coefficient k is a coefficient based on the inductance Ltx of the power transmission antenna 305, the voltage value Vtx of the power transmission antenna 305, the inductance Lrx of the power reception antenna 405, and the voltage value Vrx of the power reception antenna 405. The coupling coefficient k may be a coefficient based on the number of turns of the power transmission antenna 305, the voltage value Vtx of the power transmission antenna 305, the number of turns of the power reception antenna 405, and the voltage value Vrx of the power reception antenna 405.

For example, the voltage value Vrx of the power reception antenna 405 and the inductance Lrx or the number of turns of the power reception antenna 405 are received from the power reception device 101. At least the voltage value Vrx of the power reception antenna 405 is received from the power reception device 101.

The initial value k0 of the coupling coefficient is a coupling coefficient between the power transmission antenna 305 and the power reception antenna 405 at a time before the coupling coefficient k. The coupling coefficient k is a coupling coefficient after the transition is made to the Power Transfer phase in step S1006. The initial value k0 of the coupling coefficient is a coupling coefficient before the transition is made to the Power Transfer phase in step S1006.

In step S1011, the power transmission device 102 functions as a foreign object detection unit and performs a foreign object detection process using the waveform decay method in accordance with the coupling coefficient k acquired in step S1009. Specifically, if the difference between the coupling coefficient k and the initial value k0 of the coupling coefficient is larger than the threshold k_diff, the power transmission device 102 performs the foreign object detection process using the waveform decay method. If the difference between the coupling coefficient k and the initial value k0 of the coupling coefficient is smaller than the threshold k_diff, the power transmission device 102 does not perform the foreign object detection process using the waveform decay method. The foreign object detection process described above is a detection process for detecting an object different from the power reception device 101 on the basis of the values of the voltage or the current at at least two points in time during a predetermined time period in which the power transmission device 102 limits power transmission.

In step S1011, the power transmission device 102 acquires the Q-factor of the power transmission antenna 305 by using the waveform decay method in accordance with (Equation 1). The threshold Q0 in step S1007 is the Q-factor of the power transmission antenna 305 at a time before the Q-factor is acquired in step S1011.

In step S1012, the power transmission device 102 determines the presence or absence of a foreign object in accordance with the Q-factor acquired in step S1011. In step S1013, the power transmission device 102 determines that a foreign object is present when the difference between the Q-factor acquired in step S1011 and the threshold Q0 is larger than the threshold Q_diff. In step S1021, the power transmission device 102 determines that the relative positional relationship between the power transmission antenna 305 and the power reception antenna 405 has changed when the difference between the Q-factor acquired in step S1011 and the threshold Q0 is smaller than the threshold Q_diff.

In step S1023, the power transmission device 102 updates the coupling coefficient k as a new initial value k0 of the coupling coefficient when the difference between the Q-factor acquired in step S1011 and the threshold Q0 is smaller than the threshold Q_diff. In step S1025, the power transmission device 102 performs calibration of the power transmission device 102 when the difference between the Q-factor acquired in step S1011 and the threshold Q0 is smaller than the threshold Q_diff.

As described above, when performing wireless power transfer, the power transmission device 102 executes detection of an object different from the power reception device 101 (foreign object detection). In this case, the power transmission device 102 appropriately determines the necessity of execution of foreign object detection by using a change in the coupling state between the power transmission antenna 305 and the power reception antenna 405 based on a change in the energy decay of the power to be transmitted, and reduces the number of times of execution of foreign object detection. This can reduce the generation of electromagnetic noise caused by the stop of power transmission for foreign object detection.

(Second Embodiment)

In the first embodiment, the intrusion of a foreign object between the power transmission antenna 305 and the power reception antenna 405 during the Calibration phase may result in failure to obtain an appropriate calibration result.

To address the possible failure to obtain an appropriate calibration result, the power transmission device 102 and the power reception device 101 according to a second embodiment execute the foreign object detection using the waveform decay method during calibration. The processes performed by the power transmission device 102 and the power reception device 101 according to the second embodiment will be described focusing on differences from the first embodiment.

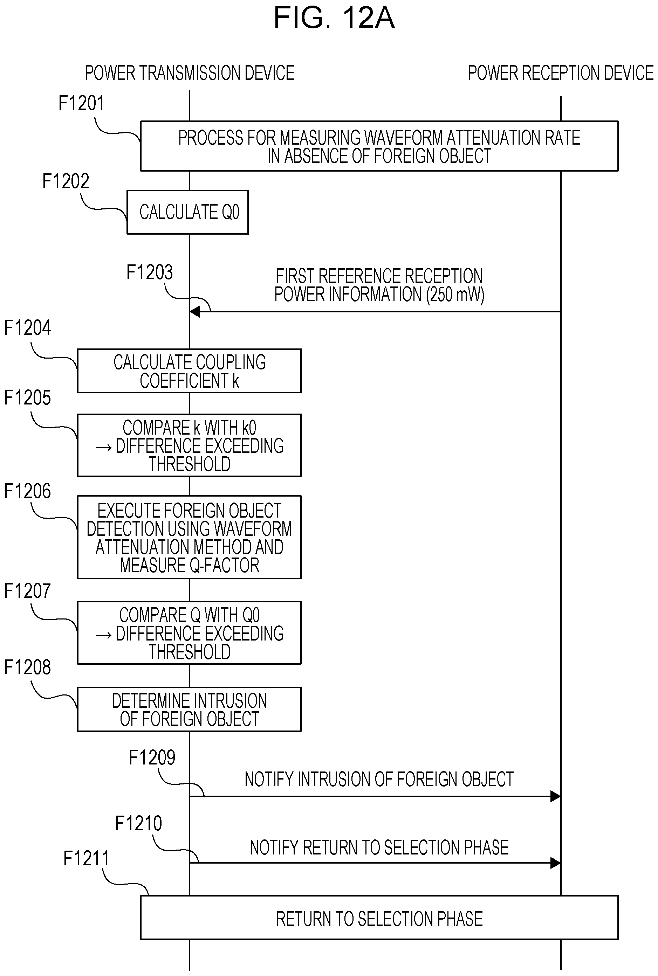

Fig. 12A is a sequence diagram of the Calibration phase of the power transmission device 102 and the power reception device 101 according to the second embodiment. The power transmission device 102 measures the coupling state between the power transmission antenna 305 and the power reception antenna 405 and determines whether to execute foreign object detection by using a threshold serving as a reference for determining the presence/absence of a change in the coupling state. Here, an example will be described in which a coupling coefficient is used as the index for the coupling state between the power transmission antenna 305 and the power reception antenna 405. A method for calculating the initial value k0 of the coupling coefficient is similar to that in the first embodiment, and a description thereof will thus be omitted.

Further, the power transmission device 102 performs the foreign object detection using the waveform decay method by using a threshold as a reference for determining the presence/absence of a foreign object. Here, a method will be described in which the power transmission device 102 measures in advance the waveform decay rate in the absence of a foreign object and calculates the threshold with reference to the waveform decay rate. Thereafter, the power transmission device 102 executes the foreign object detection using the waveform decay method and measures the waveform decay rate. The power transmission device 102 determines the "presence of a foreign object" or the "possible presence of a foreign object" if the measured waveform decay rate is higher than the threshold, and determines the "absence of a foreign object" or the "possible absence of a foreign object" if the measured waveform decay rate is lower than the threshold.

In step F1201, the power transmission device 102 and the power reception device 101 set, in the initial stage of the Calibration phase, the timing of measuring the waveform decay rate in the absence of a foreign object. This is because the probability that a foreign object is located near the power transmission device 102 and the power reception device 101 increases as time elapses after the absence of a foreign object is determined by using the Q-factor measurement method. In step F1202, at the timing of performing foreign object detection, which is designated by the power reception device 101 or the power transmission device 102, the power transmission device 102 measures the waveform decay rate of the power transmission waveform in the absence of a foreign object and calculates the threshold Q0 based on the measured waveform decay rate.

In step F1203, the power reception device 101 acquires information including the received power value and the power reception voltage value Vrx in the light-load state (hereinafter referred to as first reference received power voltage information) to the power transmission device 102. The light-load state is a state of Light Load, a load-disconnected state, or a load state in which the transmitted power value is equal to or less than the first threshold. The first reference received power voltage information is received power voltage information of the power reception device 101 when the transmitted power of the power transmission device 102 is 250 milliwatts.

The first reference received power voltage information is a received power packet (mode 1) defined by the WPC standard, but may be any other message. Upon receiving the received power packet, the power transmission device 102 acquires the power reception voltage value Vrx and records the power reception voltage value Vrx in the memory 306. Further, the power transmission device 102 measures the power transmission voltage value Vtx of the power transmission device 102 and records the power transmission voltage value Vtx in the memory 306.

In step F1204, the power transmission device 102 calculates the current coupling state. Here, the power transmission device 102 calculates the coupling coefficient k between the power transmission antenna 305 and the power reception antenna 405. For example, the power transmission device 102 calculates the coupling coefficient k by using Vtx, Vrx, Ltx, and Lrx in accordance with (Equation 2) and records the coupling coefficient k in the memory 306.

In step F1205, the power transmission device 102 determines whether the difference between the coupling coefficient k and the initial value k0 of the coupling coefficient, which has already been calculated, exceeds the preset threshold k_diff. If the difference exceeds the threshold k_diff, the process proceeds to step F1206.

In step F1206, the power transmission device 102 executes the foreign object detection using the waveform decay method and measures the Q-factor of the power transmission antenna 305. In step F1207, the power transmission device 102 compares the measured Q-factor with the threshold Q0 and determines whether the difference between the measured Q-factor and the threshold Q0 exceeds the threshold Q_diff. If the difference exceeds the threshold Q_diff, the process proceeds to step F1208.

In step F1208, the power transmission device 102 determines the intrusion of a foreign object between the power transmission antenna 305 and the power reception antenna 405. In step F1209, the power transmission device 102 notifies the power reception device 101 of the intrusion of a foreign object by using a predetermined packet. For example, the power transmission device 102 transmits an NAK, which is a negative response, to the power reception device 101. In step F1210, the power transmission device 102 stops the calibration processing and notifies the power reception device 101 of return to the Selection phase. In step F1211, the power transmission device 102 and the power reception device 101 return to the Selection phase.

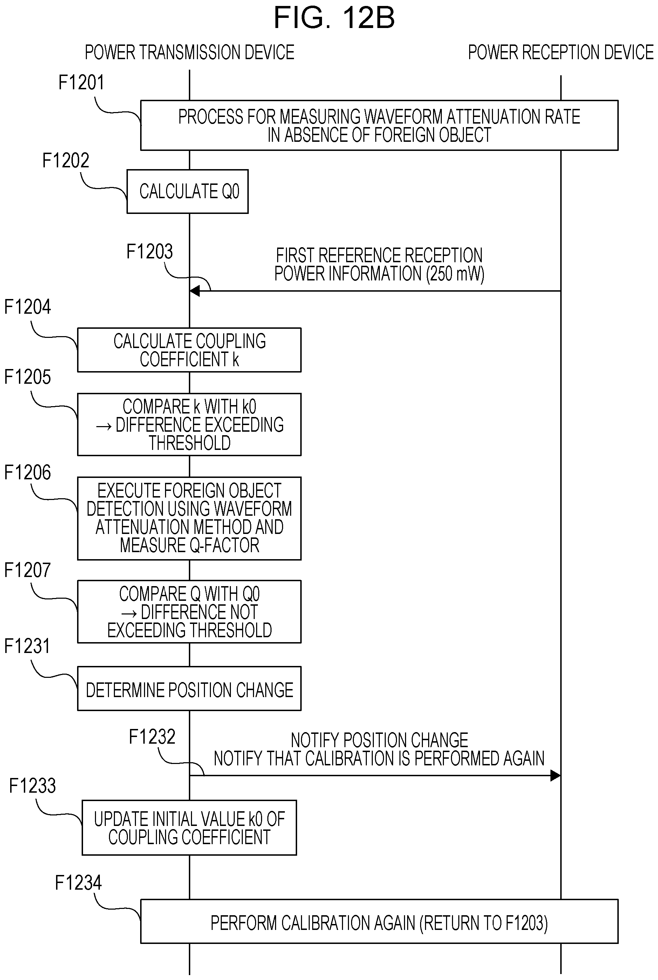

Fig. 12B is a sequence diagram illustrating other processing of step F1207 in Fig. 12A. Steps F1201 to F1206 are the same as those in Fig. 12A.

In step F1207, the power transmission device 102 compares the measured Q-factor with the threshold Q0 and determines whether the difference between the measured Q-factor and the threshold Q0 exceeds the threshold Q_diff. If the difference does not exceed the threshold Q_diff, the process proceeds to step F1231.

In step F1231, the power transmission device 102 determines that the relative position between the power transmission antenna 305 and the power reception antenna 405 has changed. In step F1232, the power transmission device 102 notifies the power reception device 101 that the relative position between the power transmission antenna 305 and the power reception antenna 405 has changed, and notifies the power reception device 101 that calibration will be performed again. For example, the power transmission device 102 transmits an NAK, which is a negative response, to the power reception device 101, then transmits a request packet, and further transmits a request operation identification packet. The request packet is a packet indicating that the power transmission device 102 requests the power reception device 101 to perform an operation. The request operation identification packet is a packet including identification information for identifying the operation that the power reception device 101 is requested to perform by the power transmission device 102. The identification information is a request to perform the calibration again from the beginning. The processing of step F1232 may be performed by using a single packet. That is, the power transmission device 102 may transmit, to the power reception device 101, a packet indicating that the power transmission device 102 requests the power reception device 101 to perform an operation and including identification information for identifying the requested operation.

In step F1233, the power transmission device 102 updates the calculated coupling coefficient k as the initial value k0 of the coupling coefficient. In step F1234, the power transmission device 102 and the power reception device 101 return to step F1203 and perform the calibration again.

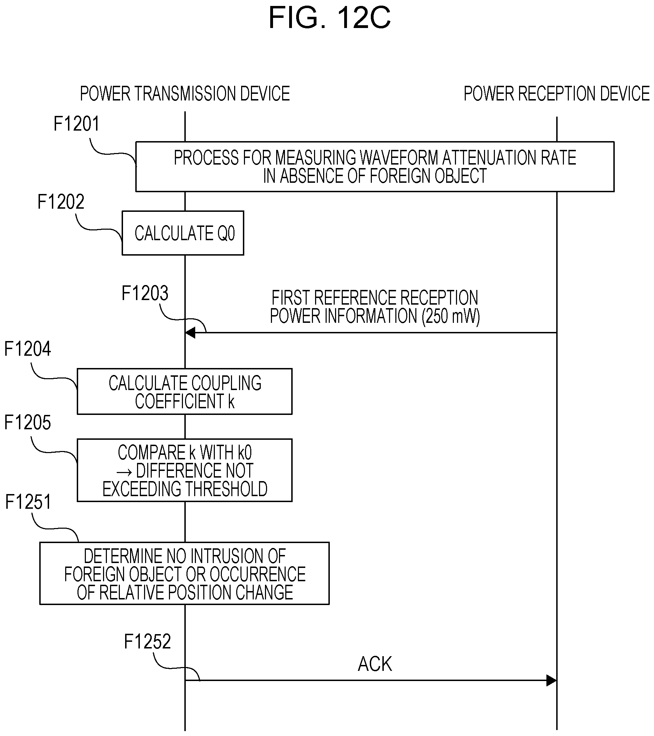

Fig. 12C is a sequence diagram illustrating other processing of step F1205 in Fig. 12A. Steps F1201 to F1204 are the same as those in Fig. 12A.

In step F1205, the power transmission device 102 determines whether the difference between the coupling coefficient k and the initial value k0 of the coupling coefficient, which has already been calculated, exceeds the threshold k_diff. If the difference does not exceed the threshold k_diff, the process proceeds to step F1251.

In step F1251, the power transmission device 102 determines that neither the intrusion of a foreign object nor the change in the relative position described above has occurred. In step F1252, the power transmission device 102 notifies the power reception device 101 of the result by using a predetermined packet. For example, the power transmission device 102 transmits an ACK, which is a positive response, to the power reception device 101.

After that, the power transmission device 102 and the power reception device 101 perform calibration in the load-connected state (the state of Connected Load, the maximum load state, or the load state in which the transmitted power value is equal to or greater than the second threshold). The calibration is a process similar to that of the calibration in the light-load state, and a description thereof will thus be omitted.

As described above, in the Calibration phase, when performing wireless power transfer, the power transmission device 102 executes detection of an object different from the power reception device 101 (foreign object detection). In this case, the power transmission device 102 appropriately determines the necessity of execution of foreign object detection by using a change in the coupling state between the power transmission antenna 305 and the power reception antenna 405 based on a change in the energy decay of the power to be transmitted by the power transmission device 102, and reduces the number of times of execution of foreign object detection. This can reduce the generation of electromagnetic noise caused by the stop of power transmission for foreign object detection.

(Third Embodiment)

The first embodiment provides an example in which the power transmission device 102 measures the coupling state between the power transmission antenna 305 and the power reception antenna 405 and determines whether to execute the foreign object detection using the waveform decay method. A third embodiment describes an example in which the power reception device 101 performs the measurement of the coupling state between the power transmission antenna 305 and the power reception antenna 405 and the foreign object detection using the waveform decay method. The processes performed by the power transmission device 102 and the power reception device 101 according to the third embodiment will be described focusing on differences from the first embodiment.

[Processing of Power Transmission Device in Application of Waveform Decay Method to WPC Standard]

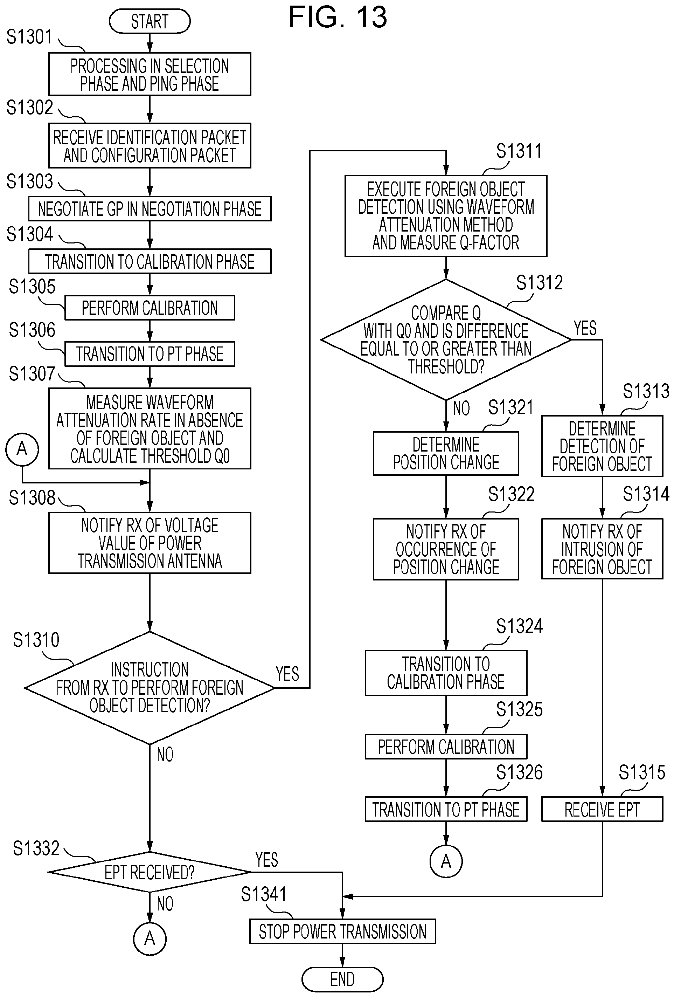

Fig. 13 is a flowchart illustrating a processing method of the power transmission device 102 when the waveform decay method is applied to the WPC standard.

The measurement of the coupling state between the power transmission antenna 305 and the power reception antenna 405 and determination of whether to execute foreign object detection require a threshold serving as a reference for determining the presence/absence of a change in the coupling state. Here, an example will be described in which a coupling coefficient is used as the index for the coupling state between the power transmission antenna 305 and the power reception antenna 405, and a processing method of the power transmission device 102 for calculating the initial value k0 of the coupling coefficient will be described.

In step S1301, the power transmission device 102 performs the processing in the Selection phase and the Ping phase. In the Ping phase, the power transmission device 102 measures a voltage value Vtx0 of the power transmission antenna 305 during transmission of the digital ping, and records the voltage value Vtx0 in the memory 306. In response to a request from the power reception device 101 for information on the voltage value Vtx0 by using a predetermined packet, the power transmission device 102 notifies the power reception device 101 of the information on the voltage value Vtx0. A general request packet or a specific request packet can be used as the predetermined packet.

In step S1302, the power transmission device 102 receives an identification packet and a configuration packet from the power reception device 101 in the I & C phase. In the I & C phase, in response to a request from the power reception device 101 for information on the inductance value Ltx of the power transmission antenna 305 by using a predetermined packet, the power transmission device 102 notifies the power reception device 101 of the information on the inductance value Ltx. A general request packet or a specific request packet can be used as the predetermined packet. The power reception device 101 calculates the initial value k0 of the coupling coefficient by using Vtx0 and Ltx of which the power transmission device 102 has notified the power reception device 101.

In step S1303, in the Negotiation phase, the power transmission device 102 negotiates with the power reception device 101 for the value of GP and determines the value of GP. In step S1304, the power transmission device 102 transitions to the Calibration phase. In step S1305, the power transmission device 102 performs calibration. In step S1306, the power transmission device 102 transitions to the Power Transfer phase.

The foreign object detection using the waveform decay method requires a threshold as a reference for determining the presence/absence of a foreign object. Here, a method is used in which, as in the first embodiment, the power transmission device 102 measures in advance the waveform decay rate in the absence of a foreign object and calculates the threshold with reference to the waveform decay rate. As in the first embodiment, the power transmission device 102 sets, in the initial stage of the Power Transfer phase, the timing of measuring the waveform decay rate in the absence of a foreign object. In step S1307, the power transmission device 102 measures the waveform decay rate of the power transmission waveform in the absence of a foreign object and calculates the threshold Q0 from the waveform decay rate.

In step S1308, the power transmission device 102 measures the voltage value Vtx of the power transmission antenna 305 during power transmission and records the voltage value Vtx in the memory 306. In response to a request from the power reception device 101 for information on the voltage value Vtx by using a predetermined packet, the power transmission device 102 notifies the power reception device 101 of the information on the voltage value Vtx. A general request packet or a specific request packet can be used as the predetermined packet. After that, the power reception device 101 calculates the coupling coefficient k between the power transmission antenna 305 and the power reception antenna 405 on the basis of the voltage value Vtx notified from the power transmission device 102. The power reception device 101 determines whether the difference between the coupling coefficient k and the initial value k0 of the coupling coefficient, which has already been calculated, exceeds the preset threshold k_diff. If the difference exceeds the preset threshold k_diff, the power reception device 101 determines that the power transmission device 102 is to perform the foreign object detection using the waveform decay method.

In step S1310, the power transmission device 102 determines whether an instruction has been received from the power reception device 101 to perform foreign object detection. The instruction to perform foreign object detection can be implemented by a received power packet (mode 0). If an instruction has been received to perform foreign object detection (YES in S1310), the process proceeds to step S1311. If no instruction is received to perform foreign object detection (NO in S1310), the process proceeds to Step S1332.

In step S1311, the power transmission device 102 executes the foreign object detection using the waveform decay method and measures the Q-factor of the power transmission antenna 305. In step S1312, the power transmission device 102 compares the measured Q-factor with the threshold Q0 and determines whether the difference between the measured Q-factor and the threshold Q0 is equal to or greater than the preset threshold Q_diff. If the difference is equal to or greater than the threshold Q_diff (YES in S1312), the power transmission device 102 performs the processing of steps S1313 to S1315. If the difference is less than the threshold Q_diff (NO in S1312), the power transmission device 102 performs the processing of steps S1321 to S1326. The processing of steps S1313 to S1315 is similar to the processing of steps S1013 to S1015 in Fig. 10. The processing of steps S1321, S1322, and S1324 to S1326 is similar to the processing of steps S1021, S1022, and S1024 to S1026 in Fig. 10. Note that the power transmission device 102 does not perform the processing of step S1023 in Fig. 10 for updating the initial value k0 of the coupling coefficient.

In step S1332, the power transmission device 102 determines whether an EPT packet has been received from the power reception device 101. If the power transmission device 102 has received an EPT packet (YES in S1332), the process proceeds to step S1341. If the power transmission device 102 has not received an EPT packet (NO in S1332), the process returns to step S1308. In step S1341, the power transmission device 102 stops power transmission.

[Processing of Power Reception Device in Application of Waveform Decay Method to WPC Standard]

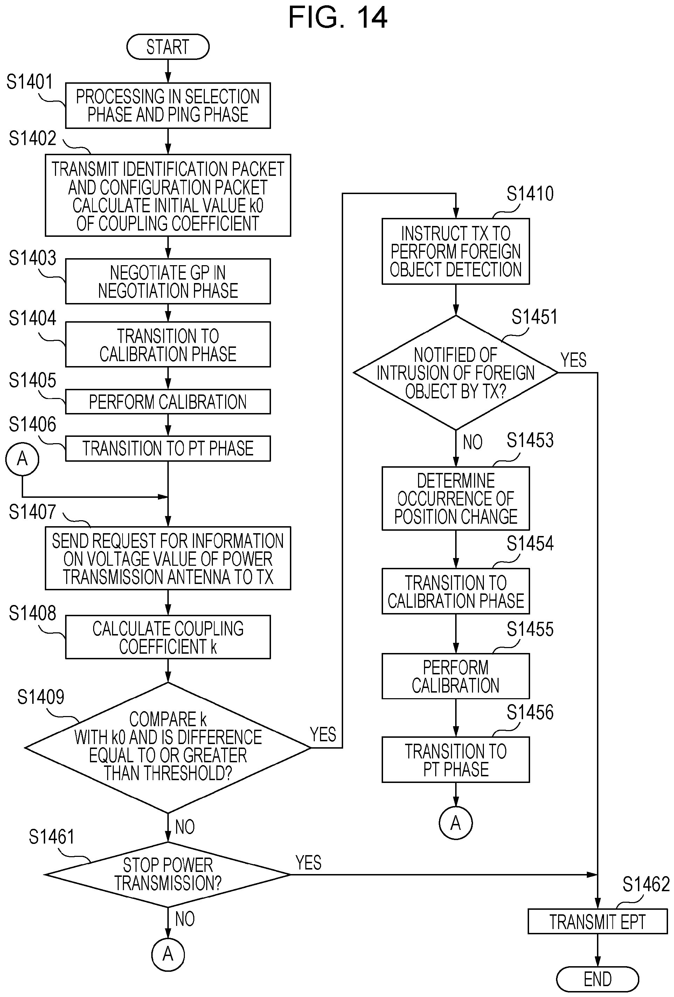

Fig. 14 is a flowchart illustrating a processing method of the power reception device 101 in a case where foreign object detection is performed by applying the waveform decay method to the WPC standard. Differences from the WPC standard will mainly be described.

The measurement of the coupling state between the power transmission antenna 305 and the power reception antenna 405 and determination of whether to execute foreign object detection require a threshold serving as a reference for determining the presence/absence of a change in the coupling state. Here, an example will be described in which a coupling coefficient is used as the index for the coupling state between the power transmission antenna 305 and the power reception antenna 405, and a method for exchanging information necessary for calculating the initial value k0 of the coupling coefficient will be described.

In step S1401, the power reception device 101 performs the processing in the Selection phase and the Ping phase. In the Ping phase, the power reception device 101 receives the digital ping from the power transmission device 102 and measures the power reception voltage value VrxO. Then, the power reception device 101 notifies the power transmission device 102 of the power reception voltage value VrxO by using a predetermined packet. A signal strength packet can be used as the predetermined packet. The signal strength packet may include not only the power reception voltage value but also the received power value of the power reception device 101, or another signal strength packet may be used to notify the power transmission device 102 of the received power value of the power reception device 101. Further, the power reception device 101 sends a request for the information on the voltage value Vtx0 of the power transmission antenna 305 of the power transmission device 102 to the power transmission device 102 by using a predetermined packet. A general request packet or a specific request packet can be used as the predetermined packet.

In step S1402, the power reception device 101 transmits an identification packet and a configuration packet to the power transmission device 102 in the I & C phase. In the I & C phase, the power reception device 101 sends a request for the information on the inductance value Ltx of the power transmission antenna 305 of the power transmission device 102 to the power transmission device 102 by using a predetermined packet. An identification packet or an extended identification packet can be used as the predetermined packet. The power reception device 101 calculates the initial value k0 of the coupling coefficient by using the voltage value Vtx0 and the inductance value Ltx acquired from the power transmission device 102.

In step S1403, in the Negotiation phase, the power reception device 101 negotiates with the power transmission device 102 for the value of GP. In step S1404, the power reception device 101 transitions to the Calibration phase. In step S1405, the power reception device 101 performs calibration. In step S1406, the power reception device 101 transitions to the Power Transfer phase.

In step S1407, the power reception device 101 sends a request for the information on the voltage value Vtx to the power transmission device 102 by using a predetermined packet. A general request packet or a specific request packet can be used as the predetermined packet. In step S1408, the power reception device 101 calculates the coupling coefficient k between the power transmission antenna 305 and the power reception antenna 405 on the basis of the voltage value Vtx notified from the power transmission device 102.

In step S1409, the power reception device 101 compares the coupling coefficient k with the initial value k0 of the coupling coefficient, which has already been calculated, and determines whether the difference between the coupling coefficient k and the initial value k0 of the coupling coefficient is equal to or greater than the preset threshold k_diff. If the difference is equal to or greater than the threshold k_diff (YES in S1409), the process proceeds to step S1410. If the difference is less than the threshold k_diff (NO in S1409), it is determined that neither the intrusion of a foreign object nor the change in relative position has occurred, and the process proceeds to step S1461.

In step S1410, the power reception device 101 determines that the power transmission device 102 is to perform the foreign object detection using the waveform decay method, and notifies the power transmission device 102 of an instruction to perform the foreign object detection. The instruction to perform foreign object detection can be implemented by a received power packet (mode 0). In step S1451, the power reception device 101 determines whether the power reception device 101 has been notified by the power transmission device 102 of the intrusion of a foreign object by using a predetermined packet. The predetermined packet is, for example, an NCK, which is a negative response. If the power reception device 101 has been notified of the intrusion of a foreign object by using a predetermined packet (YES in S1451), the process proceeds to step S1462. If the power reception device 101 has been notified of no intrusion of a foreign object by using a predetermined method (NO in S1451), the process proceeds to step S1453. The predetermined method is, for example, an ACK, which is a positive response.

In step S1453, the power reception device 101 determines that the relative position between the power transmission antenna 305 and the power reception antenna 405 has changed. In step S1453, furthermore, the power reception device 101 updates the coupling coefficient k calculated in step S1408 as a new initial value k0 of the coupling coefficient.

In step S1454, the power reception device 101 transitions to the Calibration phase. In step S1455, the power reception device 101 performs calibration. In step S1456, the power reception device 101 transitions to the Power Transfer phase. Thereafter, the process returns to step S1407.

In step S1461, the power reception device 101 determines whether to stop the transmission of power from the power transmission device 102. If power transmission is to be stopped (YES in S1461), the process proceeds to step S1462. If power transmission is not to be stopped (NO in S1461), the process returns to step S1407. In step S1462, the power reception device 101 transmits an EPT packet to the power transmission device 102 to request stop of power transmission.

As described above, the power reception device 101 wirelessly receives power from the power transmission device 102. In step S1402, the power reception device 101 functions as an acquisition unit and acquires the coupling state between the power transmission antenna 305 of the power transmission device 102 and the power reception antenna 405 of the power reception device 101. The coupling state is, for example, a coupling coefficient between the power transmission antenna 305 of the power transmission device 102 and the power reception antenna 405 of the power reception device 101 and is the initial value k0 of the coupling coefficient.

As expressed by (Equation 2), the initial value k0 of the coupling coefficient is a coefficient based on the inductance Ltx of the power transmission antenna 305, the voltage value Vtx0 of the power transmission antenna 305, the inductance Lrx of the power reception antenna 405, and the voltage value VrxO of the power reception antenna 405. The initial value k0 of the coupling coefficient may be a coefficient based on the number of turns of the power transmission antenna 305, the voltage value Vtx0 of the power transmission antenna 305, the number of turns of the power reception antenna 405, and the voltage value VrxO of the power reception antenna 405.

For example, the voltage value Vtx0 of the power transmission antenna 305 and the inductance Ltx or the number of turns of the power transmission antenna 305 are received from the power transmission device 102. At least the voltage value Vtx0 of the power transmission antenna 305 is received from the power transmission device 102.

In step S1408, the power reception device 101 functions as an acquisition unit and acquires the coupling state between the power transmission antenna 305 of the power transmission device 102 and the power reception antenna 405 of the power reception device 101. The coupling state is, for example, the coupling coefficient k between the power transmission antenna 305 of the power transmission device 102 and the power reception antenna 405 of the power reception device 101.

As expressed by (Equation 2), the coupling coefficient k is a coefficient based on the inductance Ltx of the power transmission antenna 305, the voltage value Vtx of the power transmission antenna 305, the inductance Lrx of the power reception antenna 405, and the voltage value Vrx of the power reception antenna 405. The coupling coefficient k may be a coefficient based on the number of turns of the power transmission antenna 305, the voltage value Vtx of the power transmission antenna 305, the number of turns of the power reception antenna 405, and the voltage value Vrx of the power reception antenna 405.

For example, the voltage value Vtx of the power transmission antenna 305 and the inductance Ltx or the number of turns of the power transmission antenna 305 are received from the power transmission device 102. At least the voltage value Vtx of the power transmission antenna 305 is received from the power transmission device 102.

The initial value k0 of the coupling coefficient in step S1402 is a coupling coefficient between the power transmission antenna 305 and the power reception antenna 405 at a time before the coupling coefficient k. The coupling coefficient k is a coupling coefficient after the transition is made to the Power Transfer phase in step S1406. The initial value k0 of the coupling coefficient is a coupling coefficient before the transition is made to the Power Transfer phase in step S1406.

In step S1410, the power reception device 101 functions as a transmission unit and transmits, to the power transmission device 102, an instruction to execute the foreign object detection process using the waveform decay method in accordance with the coupling coefficient k acquired in step S1408. Specifically, if the difference between the coupling coefficient k acquired in step S1408 and the initial value k0 of the coupling coefficient is larger than the threshold k_diff, the power reception device 101 transmits an instruction to the power transmission device 102 to execute the foreign object detection process using the waveform decay method. If the difference between the coupling coefficient k acquired in step S1408 and the initial value k0 of the coupling coefficient is smaller than the threshold k_diff, the power reception device 101 does not transmit an instruction to the power transmission device 102 to execute the foreign object detection process using the waveform decay method.

In step S1451, the power reception device 101 functions as a reception unit and receives information on the presence or absence of a foreign object from the power transmission device 102 in response to the transmission of the instruction to execute the foreign object detection process using the waveform decay method in step S1410. In step S1462, upon receiving information indicating the presence of a foreign object in step S1451, the power reception device 101 transmits a power transmission stop instruction (EPT packet) to the power transmission device 102.

In step S1453, upon receiving information indicating the absence of a foreign object in step S1451, the power reception device 101 determines that the relative positional relationship between the power transmission antenna 305 and the power reception antenna 405 has changed. In step S1453, furthermore, upon receiving the information indicating the absence of a foreign object in step S1451, the power reception device 101 updates the coupling coefficient k as a new initial value k0 of the coupling coefficient. In step S1455, upon receiving the information indicating the absence of a foreign object in step S1451, the power reception device 101 performs calibration of the power reception device 101.

As described above, when performing wireless power transfer, the power transmission device 102 executes detection of an object different from the power reception device 101 (foreign object detection). In this case, the power reception device 101 appropriately determines the necessity of execution of foreign object detection by using a change in the coupling state between the power transmission antenna 305 and the power reception antenna 405 based on a change in the energy decay of the power to be transmitted, and reduces the number of times of execution of foreign object detection. This can reduce the generation of electromagnetic noise caused by the stop of power transmission for foreign object detection.

(Fourth Embodiment)

The second embodiment is directed to execution of the foreign object detection using the waveform decay method during calibration, and provides an example in which the power transmission device 102 measures the coupling state between the power transmission antenna 305 and the power reception antenna 405 and determines whether to execute the foreign object detection using the waveform decay method. A fourth embodiment describes an example in which the power reception device 101 performs the measurement of the coupling state between the power transmission antenna 305 and the power reception antenna 405 and the foreign object detection using the waveform decay method. The processes performed by the power transmission device 102 and the power reception device 101 according to the fourth embodiment will be described focusing on differences from the second embodiment.

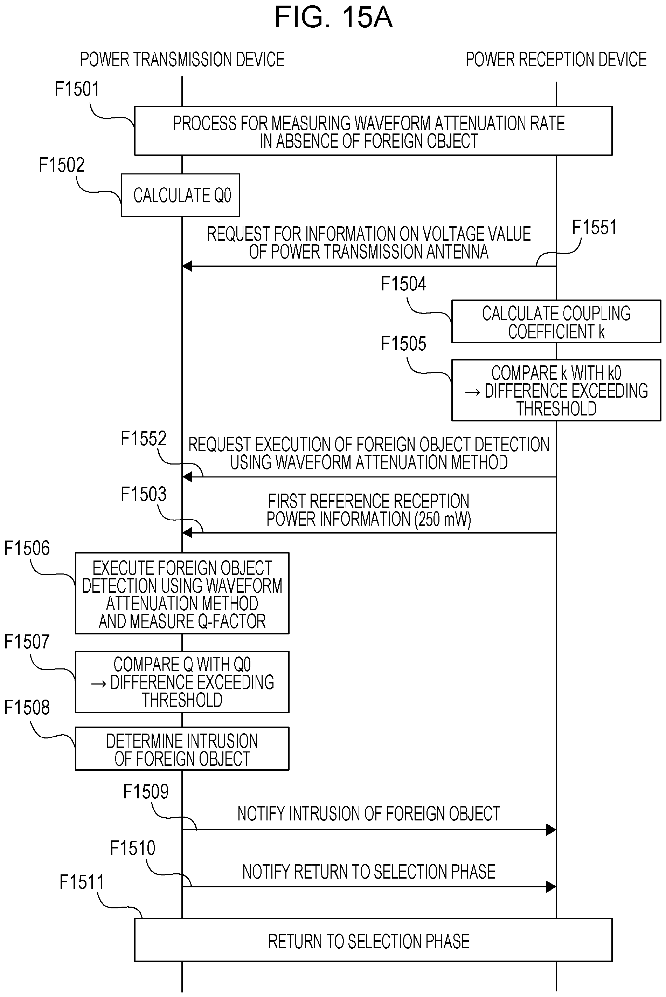

Fig. 15A is a sequence diagram of the Calibration phase of the power transmission device 102 and the power reception device 101 according to the fourth embodiment. The measurement of the coupling state between the power transmission antenna 305 and the power reception antenna 405 and determination of whether to execute foreign object detection require a threshold serving as a reference for determining the presence/absence of a change in the coupling state. Here, an example will be described in which a coupling coefficient is used as the index for the coupling state between the power transmission antenna 305 and the power reception antenna 405. A method for calculating the initial value k0 of the coupling coefficient is similar to that in the first and second embodiments, and a description thereof will thus be omitted.

Further, the foreign object detection using the waveform decay method requires a threshold as a reference for determining the presence/absence of a foreign object. Here, a method will be described in which the power transmission device 102 measures in advance the waveform decay rate in the absence of a foreign object and calculates the threshold with reference to the waveform decay rate. Thereafter, the power transmission device 102 executes the foreign object detection using the waveform decay method and measures the waveform decay rate. The power transmission device 102 determines the "presence of a foreign object" or the "possible presence of a foreign object" if the measured waveform decay rate is higher than the threshold, and determines the "absence of a foreign object" or the "possible absence of a foreign object" if the measured waveform decay rate is lower than the threshold.

In step F1501, as in the second embodiment, the power transmission device 102 and the power reception device 101 set, in the initial stage of the Calibration phase, the timing of measuring the waveform decay rate in the absence of a foreign object. In step F1502, at the timing of performing foreign object detection, which is designated by the power reception device 101 or the power transmission device 102, the power transmission device 102 measures the waveform decay rate of the power transmission waveform in the absence of a foreign object and calculates the threshold Q0 based on the measured waveform decay rate.

In step F1551, the power reception device 101 sends a request for the information on the voltage value Vtx of the power transmission antenna 305 to the power transmission device 102 by using a predetermined packet. A general request packet or a specific request packet can be used as the predetermined packet.

In step F1504, the power reception device 101 calculates a coupling coefficient k between the power transmission antenna 305 and the power reception antenna 405 in accordance with (Equation 2) on the basis of the voltage value Vtx notified from the power transmission device 102. In step F1505, the power reception device 101 compares the coupling coefficient k with the initial value k0 of the coupling coefficient, which has already been calculated, and determines whether the difference between the coupling coefficient k and the initial value k0 of the coupling coefficient exceeds the preset threshold k_diff. If the difference exceeds the threshold k_diff, the process proceeds to step F1552.

In step F1552, the power reception device 101 determines to execute the foreign object detection using the waveform decay method, and requests the power transmission device 102 to execute the foreign object detection using the waveform decay method. In step F1503, the power reception device 101 transmits first reference received power information (or second reference received power information) including the received power value to the power transmission device 102. The first or second reference received power information is a received power packet (mode 1 or mode 2) defined by the WPC standard, but may be any other message. The request for execution of the foreign object detection using the waveform decay method in step F1552 can be made by using a general request packet and a specific request packet. The received power packet (mode 1 or mode 2) described above may include information on a request for execution of the foreign object detection using the waveform decay method in step F1552.

In step F1506, the power transmission device 102 executes the foreign object detection using the waveform decay method and measures the Q-factor of the power transmission antenna 305. In step F1507, the power transmission device 102 compares the measured Q-factor with the threshold Q0 and determines whether the difference between the measured Q-factor and the threshold Q0 exceeds the threshold Q_diff. If the difference exceeds the threshold Q_diff, the process proceeds to step F1508.

In step F1508, the power transmission device 102 determines the intrusion of a foreign object between the power transmission antenna 305 and the power reception antenna 405. In step F1509, the power transmission device 102 notifies the power reception device 101 of the intrusion of a foreign object by using a predetermined packet. For example, the power transmission device 102 transmits an NAK, which is a negative response, to the power reception device 101. In step F1510, the power transmission device 102 stops the calibration processing and notifies the power reception device 101 of return to the Selection phase. In step F1511, the power transmission device 102 and the power reception device 101 return to the Selection phase.

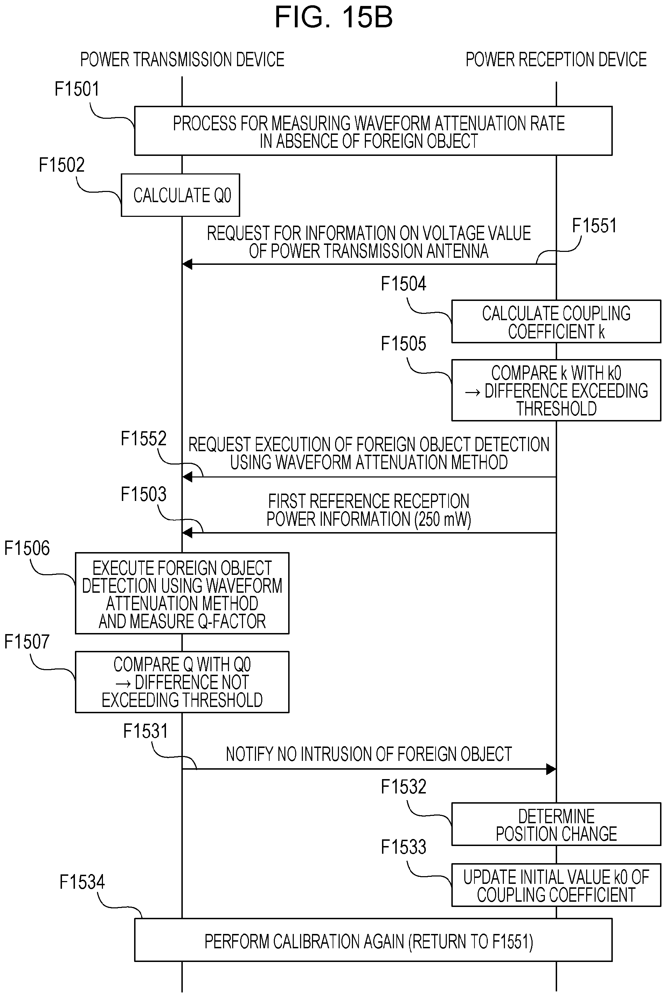

Fig. 15B is a sequence diagram illustrating other processing of step F1507 in Fig. 15A. Steps F1501 to F1506 are the same as those in Fig. 15A.

In step F1507, the power transmission device 102 compares the measured Q-factor with the threshold Q0 and determines whether the difference between the measured Q-factor and the threshold Q0 exceeds the threshold Q_diff. If the difference does not exceed the threshold Q_diff, the process proceeds to step F1531.

In step F1531, the power transmission device 102 determines no intrusion of a foreign object between the power transmission antenna 305 and the power reception antenna 405, and notifies the power reception device 101 of no intrusion of a foreign object between the power transmission antenna 305 and the power reception antenna 405 by using a predetermined packet. For example, the power transmission device 102 transmits an ACK, which is a positive response, to the power reception device 101.

In step F1532, upon receiving an ACK, the power reception device 101 determines that the relative position between the power transmission antenna 305 and the power reception antenna 405 has changed. In step F1533, the power reception device 101 updates the calculated coupling coefficient k as the initial value k0 of the coupling coefficient. In step F1534, the power transmission device 102 and the power reception device 101 return to step F1551 and perform the calibration again.

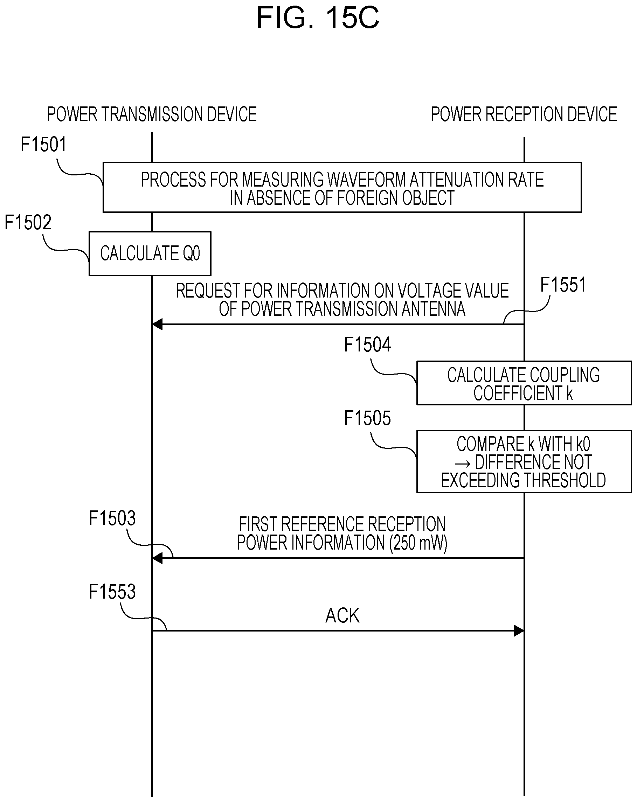

Fig. 15C is a sequence diagram illustrating other processing of step F1505 in Fig. 15A. Steps F1501, F1502, F1551, and F1504 are the same as those in Fig. 15A.

In step F1505, the power reception device 101 compares the coupling coefficient k with the initial value k0 of the coupling coefficient, which has already been calculated, and determines whether the difference between the coupling coefficient k and the initial value k0 of the coupling coefficient exceeds the threshold k_diff. If the difference does not exceed the threshold k_diff, the power reception device 101 determines not to execute the foreign object detection using the waveform decay method, and determines that neither the intrusion of a foreign object nor the change in relative position has occurred, and the process proceeds to step F1503.

In step F1503, the power reception device 101 transmits first reference received power information (or second reference received power information) including the received power value to the power transmission device 102. The first or second reference received power information is a received power packet (mode 1 or mode 2) defined by the WPC standard, but may be any other message. In step F1553, the power transmission device 102 calculates the amount of power loss between the power transmission device 102 and the power reception device 101 and transmits an ACK to the power reception device 101.

After that, the power transmission device 102 and the power reception device 101 perform calibration in the load-connected state (the state of Connected Load, the maximum load state, or the load state in which the transmitted power value is equal to or greater than the second threshold). The calibration is a process similar to that of the calibration in the light-load state, and a description thereof will thus be omitted.

As described above, in the Calibration phase, when performing wireless power transfer, the power transmission device 102 executes detection of an object different from the power reception device 101 (foreign object detection). In this case, the power reception device 101 appropriately determines the necessity of execution of foreign object detection by using a change in the coupling state between the power transmission antenna 305 and the power reception antenna 405 based on a change in the energy decay of the power to be transmitted by the power transmission device 102, and reduces the number of times of execution of foreign object detection. This can reduce the generation of electromagnetic noise caused by the stop of power transmission for foreign object detection.

(Other Embodiments)

In the first to fourth embodiments, the foreign object detection using the waveform decay method is performed, and the presence or absence of a change in Q-factor is determined by using the threshold Q0 calculated by using the waveform decay method in the absence of a foreign object, but this is not limited thereto. For example, in the Ping phase, the result of the Q-factor measurement performed by the power transmission device 102 may be used. In the Negotiation phase, the reference quality factor value, of which the power reception device 101 notifies the power transmission device 102 by using a FOD status packet, may be used.

In addition, the first to fourth embodiments describe an example in which the device that calculates the coupling state and the device that determines whether to execute the foreign object detection using the waveform decay method are the same, but this is not limited thereto. That is, one of the power transmission device 102 and the power reception device 101 may calculate the coupling state, and the other may determine whether to execute the foreign object detection using the waveform decay method.

A power reception device and a power transmission device can have a function of executing an application other than wireless charging. An example of the power reception device is an information processing terminal such as a smartphone, and an example of the power transmission device is an accessory device for charging the information processing terminal. For example, the information terminal device includes a display unit (display) that displays, to a user, information indicating that power received from a power reception coil (antenna) is supplied. The power received from the power reception coil is stored in a power storage unit (battery), and the battery supplies the power to the display unit. In this case, the power reception device may include a communication unit that communicates with another device different from the power transmission device. The communication unit may be compliant with a communication standard such as near field communication (NFC) or the fifth generation mobile communication system (5G). In this case, furthermore, the communication unit may perform communication in response to power being supplied from the battery to the communication unit. The power reception device may be a tablet terminal, a storage device such as a hard disk device and a memory device, or an information processing apparatus such as a personal computer (PC). Alternatively, the power reception device may be, for example, an imaging device (such as a camera or a video camera). Alternatively, the power reception device may be an image input apparatus such as a scanner or an image output apparatus such as a printer, a copying machine, or a projector. Alternatively, the power reception device may be a robot, a medical device, or the like. The power transmission device can be an apparatus for charging the devices described above.

Alternatively, the power transmission device may be a smartphone. In this case, the power reception device may be another smartphone or a wireless earphone.

The power reception device according to the present embodiment may be a vehicle such as an automobile or an automated guided vehicle (AGV). For example, an automobile serving as a power reception device may receive power from a charger (power transmission device) via a power transmission antenna installed in a parking lot. A vehicle serving as a power reception device may receive power from a charger (power transmission device) via a power transmission coil (antenna) embedded in a road or a traveling path.

In such a vehicle, the received power is supplied to a battery. The power of the battery may be supplied to an engine unit (a motor or an electric unit) that drives wheels, or may be used to drive a sensor used for driving assistance or to drive a communication unit that communicates with an external device. That is, in this case, the power reception device may include, in addition to the wheels, a battery, a motor and a sensor, which are driven using the received power, and a communication unit that communicates with a device other than the power transmission device. The power reception device may further include an accommodation unit that accommodates a person. Examples of the sensor include a sensor used to measure a distance between vehicles or a distance to another obstacle. The communication unit may be compliant with, for example, a global positioning system (Global Positioning System, Global Positioning Satellite, or GPS). The communication unit may be compliant with a communication standard such as the fifth generation mobile communication system (5G). Examples of the vehicle may include a bicycle and a motorcycle. The power reception device is not limited to a vehicle, and may be a moving object, a flying object, or the like having an engine unit driven using power stored in a battery.

Alternatively, the power reception device according to the present embodiment may be an electric tool, a home appliance, or the like. Such devices, which are power reception devices, may include a battery and a motor that is driven by received power stored in the battery. Such devices may also include notification means for providing notification of the remaining amount of the battery or the like. Such devices may also include a communication unit that communicates with another device different from the power transmission device. The communication unit may be compliant with a communication standard such as NFC or the fifth generation mobile communication system (5G).

Alternatively, the power transmission device according to the present embodiment may be an in-vehicle charger that transmits power to a mobile information terminal device, such as a smartphone or a tablet supporting wireless power transfer, in an automobile. Such an in-vehicle charger may be disposed anywhere in the automobile. For example, the in-vehicle charger may be installed in a console of the automobile, or may be installed in an instrument panel (dashboard), in a location between passenger seats, on a ceiling, or on a door. Note that it is desirable not to install the in-vehicle charger in a location that interferes with driving of the automobile. The power transmission device has been described as an in-vehicle charger, by way of example. Such a charger may be installed in a transport vehicle such as a train, an aircraft, or a ship, as well as a vehicle. In this case, the charger may also be installed in a location between passenger seats, on a ceiling, or on a door.

A vehicle such as an automobile including an in-vehicle charger may be a power transmission device. In this case, the power transmission device includes wheels and a battery and supplies power to a power reception device through a power transmission circuit unit or a power transmission coil (antenna) by using power of the battery.

The present disclosure may also be implemented by processing in which a program for implementing one or more functions of the embodiments described above is supplied to a system or an apparatus via a network or a storage medium and one or more processors in a computer of the system or the apparatus read and execute the program. The present disclosure may also be implemented by circuitry (e.g., an ASIC) that implements the one or more functions.

It should be noted that the embodiments described above are each merely a specific example for implementing the present disclosure, and the technical scope of the present disclosure is not interpreted in a limited manner by these embodiments. That is, the present disclosure can be implemented in various forms without departing from the technical idea or the main features thereof.

The present disclosure is not limited to the embodiments described above and may be changed and modified in various ways without departing from the spirit and scope of the present application. Accordingly, to apprise the public of the scope of the present disclosure, the following claims are made.

This application is based upon and claims the benefit of priority from Japanese Patent Application No. 2022-014198 filed February 1, 2022, the disclosure of which is incorporated herein in its entirety by reference.

**Claims**

1.    A power transmission device for wirelessly transmitting power to a power reception device, the power transmission device comprising:

acquisition means for acquiring a coupling state between an antenna of the power transmission device and an antenna of the power reception device; and

detection means for performing a detection process to detect an object different from the power reception device, detection of the object being based on a Q-factor measured during a time period in which the power transmission device limits power transmission, wherein

the detection means measures the Q-factor when the coupling state acquired by the acquisition means is a predetermined state.

2.    The power transmission device according to Claim 1, wherein the predetermined state is a state in which a difference between indices, each indicating one of two coupling states acquired at different timings by the acquisition means, is larger than a threshold.

3.    The power transmission device according to Claim 2, wherein the indices, each indicating one of the two coupling states, are each a coupling coefficient between the antenna of the power transmission device and the antenna of the power reception device.

4.    The power transmission device according to Claim 3, wherein the coupling coefficient is a coefficient based on an inductance of the antenna of the power transmission device, a voltage value of the antenna of the power transmission device, an inductance of the antenna of the power reception device, and a voltage value of the antenna of the power reception device.

5.    The power transmission device according to Claim 3, wherein the coupling coefficient is a coefficient based on a number of turns of the antenna of the power transmission device, a voltage value of the antenna of the power transmission device, a number of turns of the antenna of the power reception device, and a voltage value of the antenna of the power reception device.

6.    The power transmission device according to Claim 4 or 5, wherein information on the voltage value of the antenna of the power reception device is received from the power reception device.

7.    The power transmission device according to any one of Claims 4 to 6, wherein information on the voltage value of the antenna of the power reception device and information on the inductance or the number of turns of the antenna of the power reception device are received from the power reception device.

8. The power transmission device according to any one of Claims 2 to 7, wherein the two coupling states acquired at different timings by the acquisition means are a coupling state after a transition is made to a Power Transfer phase defined by a Wireless Power Consortium standard and a coupling state before the transition is made to the Power Transfer phase.

9. The power transmission device according to any one of Claims 1 to 8, wherein when it is determined that an object different from the power reception device is not present by execution of the detection process, the detection means uses, in the detection process to be performed next, a Q-factor referred to when it is determined that an object different from the power reception device is not present.

10. The power transmission device according to any one of Claims 1 to 9, wherein the Q-factor is measured based on values of a voltage or a current at at least two points in time during the time period in which the power transmission device limits power transmission.

11. The power transmission device according to any one of Claims 1 to 10, comprising wheels and a battery, wherein the power transmission device wirelessly transmits power to the power reception device by using power of the battery.

12. The power transmission device according to any one of Claims 1 to 11, wherein the power transmission device is installed in a vehicle.

13. A power reception device comprising:

power reception means for wirelessly receiving power from a power transmission device that performs a detection process to detect an object different from the power reception device, detection of the object being based on a Q-factor measured during a time period in which the power transmission device limits power transmission;
acquisition means for acquiring a coupling state between an antenna of the power transmission device and an antenna of the power reception device; and
communication means for transmitting an instruction to execute the detection process to the power transmission device when the coupling state acquired by the acquisition means is a predetermined state.

14. The power reception device according to Claim 13, wherein the predetermined state is a state in which a difference between indices, each indicating one of two coupling states acquired at different timings by the acquisition means, is larger than a threshold.

15. The power reception device according to Claim 13 or 14, wherein the communication means receives a result of the detection process from the power transmission device.

16. The power reception device according to Claim 15, wherein the communication means transmits a power transmission stop instruction to the power transmission device when the receiving means receives a signal indicating that an object different from the power reception device is present.

17. The power reception device according to any one of Claims 13 to 16, comprising:

a battery configured to store power received by the power reception means; and
a motor configured to drive a wheel by using power of the battery.

18. The power reception device according to any one of Claims 13 to 16, comprising:

a battery configured to store power received by the power reception means; and
a display unit to which power of the battery is to be supplied.

19. The power reception device according to any one of Claims 13 to 16, comprising:

a battery configured to store power received by the power reception means; and
notification means for providing notification of a remaining amount of the battery.

20. A method for controlling a power transmission device for wirelessly transmitting power to a power reception device, the method comprising:

an acquisition step of acquiring a coupling state between an antenna of the power transmission device and an antenna of the power reception device; and

a detection step of performing a detection process to detect an object different from the power reception device, detection of the object being based on a Q-factor measured during a time period in which the power transmission device limits power transmission, wherein

the detection step measures the Q-factor when the coupling state acquired in the acquisition step is a predetermined state.

21. A method for controlling a power reception device, the method comprising:

a power reception step of wirelessly receiving power from a power transmission device that performs a detection process to detect an object different from the power reception device, detection of the object being based on a Q-factor measured during a time period in which the power transmission device limits power transmission;

an acquisition step of acquiring a coupling state between an antenna of the power transmission device and an antenna of the power reception device; and

a transmission step of transmitting an instruction to execute the detection process to the power transmission device when the coupling state acquired in the acquisition step is a predetermined state.

22. A program for causing a computer to function as each means of the power transmission device according to any one of Claims 1 to 11, or the acquisition means and the communication means of the power reception device according to any one of Claims 13 to 19.

# FIG. 1

100

104

101 — POWER RECEPTION DEVICE

103 — CHARGING STAND

102 — POWER TRANSMISSION DEVICE

# FIG. 2

# FIG. 3

POWER TRANSMISSION DEVICE

# FIG. 4

POWER RECEPTION DEVICE

# FIG. 5

301

| | |
|---|---|
| **501**<br>COMMUNICATION CONTROL UNIT | **503**<br>MEASUREMENT UNIT |
| **502**<br>POWER TRANSMISSION CONTROL UNIT | **504**<br>SETTING UNIT |
| | **505**<br>STATE DETECTION UNIT |

# FIG. 6

POWER TRANSMISSION DEVICE             POWER RECEPTION DEVICE

F601 — Analog Ping →

F602 — PLACED

F604 — DETECT PLACEMENT ← Analog Ping — F603

← Digital Ping — F605

F606 — DETECT PLACEMENT

F607 — | EXCHANGE IDENTIFICATION INFORMATION AND CAPABILITY INFORMATION |

F608 — | DETERMINE GP (= 5 W) |

F609 — FIRST REFERENCE RECEPTION POWER INFORMATION (250 mW)

ACK — F610

F612   F611 — POWER TRANSMISSION OUTPUT CHANGE REQUEST (+)

CHANGE POWER TRANSMISSION OUTPUT (+)

ACK — F613

⋮

F615   F614 — POWER TRANSMISSION OUTPUT CHANGE REQUEST (+)

REJECT TO CHANGE POWER TRANSMISSION OUTPUT

NAK →

SECOND REFERENCE RECEPTION POWER INFORMATION (5 W) — F616

F617 — CALCULATE ESTIMATED POWER LOSS

ACK — F618

F619 — | COMMUNICATION FOR DEVICE AUTHENTICATION |

F620 — | RE-DETERMINE GP (= 15 W) |

F621 — POWER TRANSMISSION OUTPUT CHANGE REQUEST (+)

ACK — F622

⋮

F624   F623 — POWER TRANSMISSION OUTPUT CHANGE REQUEST (+)

REJECT TO CHANGE POWER TRANSMISSION OUTPUT

NAK →

THIRD REFERENCE RECEPTION POWER INFORMATION (15 W) — F625

F626 — CALCULATE ESTIMATED POWER LOSS

ACK — F627

F628 — | START POWER TRANSMISSION PROCESS |

# FIG. 7

$T_0$

$701(T_1, A_1)$

$702(T_2, A_2)$

700

VOLTAGE VALUE OR
CURRENT VALUE

TIME

# FIG. 8

# FIG. 9

r1: WINDING RESISTANCE OF POWER TRANSMISSION ANTENNA (COIL)

L1: SELF-INDUCTANCE OF POWER TRANSMISSION ANTENNA (COIL)

V1: INPUT VOLTAGE OF POWER TRANSMISSION ANTENNA (COIL)

r2: WINDING RESISTANCE OF POWER RECEPTION ANTENNA (COIL)

L2: SELF-INDUCTANCE OF POWER RECEPTION ANTENNA (COIL)

V2: OUTPUT VOLTAGE OF POWER RECEPTION ANTENNA (COIL)

# FIG. 10

S1001 — PROCESSING IN SELECTION PHASE AND PING PHASE

S1002 — RECEIVE IDENTIFICATION PACKET AND CONFIGURATION PACKET

S1003 — NEGOTIATE GP IN NEGOTIATION PHASE

S1004 — TRANSITION TO CALIBRATION PHASE

S1005 — PERFORM CALIBRATION

S1006 — TRANSITION TO PT PHASE

S1007 — MEASURE WAVEFORM ATTENUATION RATE IN ABSENCE OF FOREIGN OBJECT AND CALCULATE THRESHOLD Q0

A

S1008 — RECEIVE RECEIVED POWER PACKET (MODE 0) PACKET AND ACQUIRE VOLTAGE OF POWER RECEPTION ANTENNA

S1009 — CALCULATE COUPLING COEFFICIENT k

S1010 — COMPARE k WITH k0 AND IS DIFFERENCE EQUAL TO OR GREATER THAN THRESHOLD? — YES

NO

S1031 — NOTIFY RX OF NO INTRUSION OF FOREIGN OBJECT OR OCCURRENCE OF RELATIVE POSITION CHANGE

S1032 — EPT RECEIVED? — YES

NO

A

S1011 — EXECUTE FOREIGN OBJECT DETECTION USING WAVEFORM ATTENUATION METHOD AND MEASURE Q-FACTOR

S1012 — COMPARE Q WITH Q0 AND IS DIFFERENCE EQUAL TO OR GREATER THAN THRESHOLD? — YES

NO

S1021 — DETERMINE POSITION CHANGE

S1022 — NOTIFY RX OF OCCURRENCE OF POSITION CHANGE

S1023 — UPDATE INITIAL VALUE k0 OF COUPLING COEFFICIENT

S1024 — TRANSITION TO CALIBRATION PHASE

S1025 — PERFORM CALIBRATION

S1026 — TRANSITION TO PT PHASE

A

S1013 — DETERMINE DETECTION OF FOREIGN OBJECT

S1014 — NOTIFY RX OF INTRUSION OF FOREIGN OBJECT

S1015 — RECEIVE EPT

S1041 — STOP POWER TRANSMISSION

END

44

## FIG. 11

START

S1101 — PROCESSING IN SELECTION PHASE AND PING PHASE

S1102 — TRANSMIT IDENTIFICATION PACKET AND CONFIGURATION PACKET

S1103 — NEGOTIATE GP IN NEGOTIATION PHASE

S1104 — TRANSITION TO CALIBRATION PHASE

S1105 — PERFORM CALIBRATION

S1106 — TRANSITION TO PT PHASE

(A)

S1108 — TRANSMIT RECEIVED POWER PACKET (MODE 0) PACKET

S1151 — NOTIFIED OF INTRUSION OF FOREIGN OBJECT BY TX?
- YES →
- NO ↓

S1153 — NOTIFIED OF OCCURRENCE OF POSITION CHANGE BY TX?
- YES →
  - TRANSITION TO CALIBRATION PHASE — S1154
  - PERFORM CALIBRATION — S1155
  - TRANSITION TO PT PHASE — S1156
  - (A)
- NO ↓

S1161 — STOP POWER TRANSMISSION?
- YES →
- NO ↓
  - (A)

S1162 — TRANSMIT EPT

END

# FIG. 12A

POWER TRANSMISSION DEVICE                    POWER RECEPTION DEVICE

F1201

PROCESS FOR MEASURING WAVEFORM ATTENUATION RATE
IN ABSENCE OF FOREIGN OBJECT

F1202

CALCULATE Q0

F1203

FIRST REFERENCE RECEPTION
POWER INFORMATION (250 mW)

F1204

CALCULATE COUPLING
COEFFICIENT k

F1205

COMPARE k WITH k0
→ DIFFERENCE EXCEEDING
THRESHOLD

F1206

EXECUTE FOREIGN OBJECT
DETECTION USING WAVEFORM
ATTENUATION METHOD AND
MEASURE Q-FACTOR

F1207

COMPARE Q WITH Q0
→ DIFFERENCE EXCEEDING
THRESHOLD

F1208

DETERMINE INTRUSION
OF FOREIGN OBJECT

F1209

NOTIFY INTRUSION OF FOREIGN OBJECT

F1210

NOTIFY RETURN TO SELECTION PHASE

F1211

RETURN TO SELECTION PHASE

# FIG. 12B

POWER TRANSMISSION DEVICE                    POWER RECEPTION DEVICE

F1201 — PROCESS FOR MEASURING WAVEFORM ATTENUATION RATE
IN ABSENCE OF FOREIGN OBJECT

F1202 — CALCULATE Q0

F1203 — FIRST REFERENCE RECEPTION
POWER INFORMATION (250 mW)

F1204 — CALCULATE COUPLING
COEFFICIENT k

F1205 — COMPARE k WITH k0
→ DIFFERENCE EXCEEDING
THRESHOLD

F1206 — EXECUTE FOREIGN OBJECT
DETECTION USING WAVEFORM
ATTENUATION METHOD AND
MEASURE Q-FACTOR

F1207 — COMPARE Q WITH Q0
→ DIFFERENCE NOT
EXCEEDING THRESHOLD

F1231 — DETERMINE POSITION CHANGE

F1232 — NOTIFY POSITION CHANGE
NOTIFY THAT CALIBRATION IS PERFORMED AGAIN

F1233 — UPDATE INITIAL VALUE k0 OF
COUPLING COEFFICIENT

F1234 — PERFORM CALIBRATION AGAIN (RETURN TO F1203)

# FIG. 12C

POWER TRANSMISSION DEVICE       POWER RECEPTION DEVICE

F1201
| PROCESS FOR MEASURING WAVEFORM ATTENUATION RATE IN ABSENCE OF FOREIGN OBJECT |

F1202
| CALCULATE Q0 |

F1203
FIRST REFERENCE RECEPTION POWER INFORMATION (250 mW)

F1204
| CALCULATE COUPLING COEFFICIENT k |

F1205
| COMPARE k WITH k0 → DIFFERENCE NOT EXCEEDING THRESHOLD |

F1251
| DETERMINE NO INTRUSION OF FOREIGN OBJECT OR OCCURRENCE OF RELATIVE POSITION CHANGE |

F1252
ACK

# FIG. 13

START

S1301 — PROCESSING IN SELECTION PHASE AND PING PHASE

S1302 — RECEIVE IDENTIFICATION PACKET AND CONFIGURATION PACKET

S1303 — NEGOTIATE GP IN NEGOTIATION PHASE

S1304 — TRANSITION TO CALIBRATION PHASE

S1305 — PERFORM CALIBRATION

S1306 — TRANSITION TO PT PHASE

S1307 — MEASURE WAVEFORM ATTENUATION RATE IN ABSENCE OF FOREIGN OBJECT AND CALCULATE THRESHOLD Q0

(A)

S1308 — NOTIFY RX OF VOLTAGE VALUE OF POWER TRANSMISSION ANTENNA

S1310 — INSTRUCTION FROM RX TO PERFORM FOREIGN OBJECT DETECTION? — YES / NO

S1311 — EXECUTE FOREIGN OBJECT DETECTION USING WAVEFORM ATTENUATION METHOD AND MEASURE Q-FACTOR

S1312 — COMPARE Q WITH Q0 AND IS DIFFERENCE EQUAL TO OR GREATER THAN THRESHOLD? — YES / NO

S1321 — DETERMINE POSITION CHANGE

S1313 — DETERMINE DETECTION OF FOREIGN OBJECT

S1322 — NOTIFY RX OF OCCURRENCE OF POSITION CHANGE

S1314 — NOTIFY RX OF INTRUSION OF FOREIGN OBJECT

S1324 — TRANSITION TO CALIBRATION PHASE

S1325 — PERFORM CALIBRATION

S1326 — TRANSITION TO PT PHASE

S1315 — RECEIVE EPT

(A)

S1332 — EPT RECEIVED? — YES / NO

S1341 — STOP POWER TRANSMISSION

(A)

END

# FIG. 14

START

S1401 — PROCESSING IN SELECTION PHASE AND PING PHASE

S1402 — TRANSMIT IDENTIFICATION PACKET AND CONFIGURATION PACKET CALCULATE INITIAL VALUE k0 OF COUPLING COEFFICIENT

S1403 — NEGOTIATE GP IN NEGOTIATION PHASE

S1404 — TRANSITION TO CALIBRATION PHASE

S1405 — PERFORM CALIBRATION

S1406 — TRANSITION TO PT PHASE

(A)

S1407 — SEND REQUEST FOR INFORMATION ON VOLTAGE VALUE OF POWER TRANSMISSION ANTENNA TO TX

S1408 — CALCULATE COUPLING COEFFICIENT k

S1409 — COMPARE k WITH k0 AND IS DIFFERENCE EQUAL TO OR GREATER THAN THRESHOLD?

YES → S1410 — INSTRUCT TX TO PERFORM FOREIGN OBJECT DETECTION

S1451 — NOTIFIED OF INTRUSION OF FOREIGN OBJECT BY TX?

YES →

NO → S1453 — DETERMINE OCCURRENCE OF POSITION CHANGE

S1454 — TRANSITION TO CALIBRATION PHASE

S1455 — PERFORM CALIBRATION

S1456 — TRANSITION TO PT PHASE

(A)

NO → S1461 — STOP POWER TRANSMISSION?

YES →

NO → (A)

S1462 — TRANSMIT EPT

END

# FIG. 15A

POWER TRANSMISSION DEVICE          POWER RECEPTION DEVICE

F1501

PROCESS FOR MEASURING WAVEFORM ATTENUATION RATE
IN ABSENCE OF FOREIGN OBJECT

F1502

CALCULATE Q0

REQUEST FOR INFORMATION ON VOLTAGE VALUE
OF POWER TRANSMISSION ANTENNA    F1551

F1504

CALCULATE COUPLING
COEFFICIENT k

F1505

COMPARE k WITH k0
→ DIFFERENCE EXCEEDING
THRESHOLD

F1552   REQUEST EXECUTION OF FOREIGN OBJECT DETECTION
USING WAVEFORM ATTENUATION METHOD

F1503      FIRST REFERENCE RECEPTION
POWER INFORMATION (250 mW)

F1506

EXECUTE FOREIGN OBJECT
DETECTION USING WAVEFORM
ATTENUATION METHOD
AND MEASURE Q-FACTOR

F1507

COMPARE Q WITH Q0
→ DIFFERENCE EXCEEDING
THRESHOLD

F1508

DETERMINE INTRUSION
OF FOREIGN OBJECT

F1509

NOTIFY INTRUSION OF FOREIGN OBJECT

F1510

NOTIFY RETURN TO SELECTION PHASE

F1511

RETURN TO SELECTION PHASE

# FIG. 15B

POWER TRANSMISSION DEVICE             POWER RECEPTION DEVICE

F1501
| PROCESS FOR MEASURING WAVEFORM ATTENUATION RATE IN ABSENCE OF FOREIGN OBJECT |

F1502
| CALCULATE Q0 |

REQUEST FOR INFORMATION ON VOLTAGE VALUE OF POWER TRANSMISSION ANTENNA   F1551

F1504
| CALCULATE COUPLING COEFFICIENT k |

F1505
| COMPARE k WITH k0 → DIFFERENCE EXCEEDING THRESHOLD |

F1552   REQUEST EXECUTION OF FOREIGN OBJECT DETECTION USING WAVEFORM ATTENUATION METHOD

F1503   FIRST REFERENCE RECEPTION POWER INFORMATION (250 mW)

F1506
| EXECUTE FOREIGN OBJECT DETECTION USING WAVEFORM ATTENUATION METHOD AND MEASURE Q-FACTOR |

F1507
| COMPARE Q WITH Q0 → DIFFERENCE NOT EXCEEDING THRESHOLD |

F1531   NOTIFY NO INTRUSION OF FOREIGN OBJECT

F1532
| DETERMINE POSITION CHANGE |

F1533
| UPDATE INITIAL VALUE k0 OF COUPLING COEFFICIENT |

F1534
| PERFORM CALIBRATION AGAIN (RETURN TO F1551) |

# FIG. 15C

POWER TRANSMISSION DEVICE                    POWER RECEPTION DEVICE

F1501

PROCESS FOR MEASURING WAVEFORM ATTENUATION RATE
IN ABSENCE OF FOREIGN OBJECT

F1502

CALCULATE Q0

REQUEST FOR INFORMATION ON VOLTAGE VALUE          F1551
OF POWER TRANSMISSION ANTENNA

F1504

CALCULATE COUPLING
COEFFICIENT k

F1505

COMPARE k WITH k0
→ DIFFERENCE NOT
EXCEEDING THRESHOLD

F1503                    FIRST REFERENCE RECEPTION
POWER INFORMATION (250 mW)

F1553

ACK

<center>**INTERNATIONAL SEARCH REPORT**</center>

| | International application No. |
|---|---|
| | **PCT/JP2023/001711** |

**A.    CLASSIFICATION OF SUBJECT MATTER**

*H02J 50/60*(2016.01)i; *H02J 7/00*(2006.01)i; *H02J 50/12*(2016.01)i; *H02J 50/80*(2016.01)i
FI:    H02J50/60; H02J50/12; H02J7/00 301D; H02J50/80; H02J7/00 P

According to International Patent Classification (IPC) or to both national classification and IPC

**B.    FIELDS SEARCHED**

Minimum documentation searched (classification system followed by classification symbols)

H02J50/60; H02J7/00; H02J50/12; H02J50/80

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2021-164271 A (CANON KK) 11 October 2021 (2021-10-11)<br>paragraphs [0010]-[0124], fig. 1-11 | 1-22 |
| Y | US 2021/0050746 A1 (APPLE INC.) 18 February 2021 (2021-02-18)<br>paragraphs [0031]-[0035] | 1-22 |
| Y | JP 2015-89267 A (FUNAI ELECTRIC CO., LTD.) 07 May 2015 (2015-05-07)<br>paragraph [0012] | 4-7 |
| Y | JP 2016-111873 A (SHOWA AIRCRAFT IND) 20 June 2016 (2016-06-20)<br>paragraphs [0013], [0032]-[0033] | 4-7 |
| A | JP 2021-129457 A (CANON KK) 02 September 2021 (2021-09-02)<br>paragraph [0107] | 1-22 |
| P, A | WO 2022/264760 A1 (CANON KK) 22 December 2022 (2022-12-22)<br>paragraphs [0009]-[0258], fig. 1-18 | 1-22 |

☐ Further documents are listed in the continuation of Box C.            ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 March 2023** | **11 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/001711**

| Patent document cited in search report | | | Publication date (day/month/year) | Patent family member(s) | | | Publication date (day/month/year) |
|---|---|---|---|---|---|---|---|
| JP | 2021-164271 | A | 11 October 2021 | US 2021/0305849 A1 paragraphs [0019]-[0134], fig. 1-11 | | | |
| US | 2021/0050746 | A1 | 18 February 2021 | WO 2021/030120 A1 paragraphs [0030]-[0035] | | | |
| JP | 2015-89267 | A | 07 May 2015 | US 2015/0115731 A1 paragraph [0015] | | | |
| JP | 2016-111873 | A | 20 June 2016 | (Family: none) | | | |
| JP | 2021-129457 | A | 02 September 2021 | WO 2021/161760 A1 | | | |
| WO | 2022/264760 | A1 | 22 December 2022 | (Family: none) | | | |

Form PCT/ISA/210 (patent family annex) (January 2015)

**REFERENCES CITED IN THE DESCRIPTION**

**Patent documents cited in the description**

- JP 2017070074 A
- JP 2018512036 W
- JP 2022014198 A